# EUROPEAN PATENT SPECIFICATION

(11) **EP 1 977 413 B1**
(45) Date of publication and mention of the grant of the patent: **12.03.2014**
(21) Application number: 06836510.5
(22) Date of filing: 25.10.2006
(51) Int. Cl.: G02B 26/10, G09G 3/02, H04N 9/31, G03B 21/16, G06F 3/038

(54) **OPTICAL DESIGNS FOR SCANNING BEAM DISPLAY SYSTEMS USING FLUORESCENT SCREENS**
OPTISCHE ENTWÜRFE FÜR RASTERSTRAHL-ANZEIGESYSTEME MIT FLUORESZENZSCHIRMEN
CONCEPTIONS OPTIQUES POUR SYSTEMES D'AFFICHAGE A FAISCEAUX DE BALAYAGE UTILISANT DES ECRANS FLUORESCENTS

(30) Priority: 25.10.2005 US 730401 P; 19.01.2006 US 337170; 03.03.2006 US 779261 P; 31.03.2006 WO PCT/US2006/011757; 02.05.2006 US 578038; 15.05.2006 US 800870 P; 24.08.2006 US 510495
(43) Date of publication of application: 08.10.2008
(73) Proprietor: Prysm, Inc., San Jose CA 95134 (US)
(72) Inventor: MALYAK, Phillip, H., Canton, Massachusetts 02021 (US); CAPPIELLO, Gregory, G., Windham, New Hampshire 03087 (US); MCCANN, James, T., Marlow, New Hampshire 03456 (US); UEBBING, John, Palo Alto, California 94306 (US); WATSON, John, M., WestboroughMA 01581 (US); HAJJAR, Roger, A., San Jose, California 95125 (US)
(74) Representative: Lloyd, Patrick Alexander Desmond
(86) International application number: PCT/US2006/041584
(87) International publication number: WO 2007/050662

(56) References cited:
- JP-A- 2 157 790
- US-A- 4 978 202
- US-A- 5 473 396
- US-A- 5 715 021
- US-A- 5 907 312
- US-A- 5 920 361
- US-A- 6 128 131
- US-A1- 2002 122 260
- US-A1- 2005 093 818
- US-B2- 7 302 174

## Description

### Background

This application relates to display systems that use screens with fluorescent materials to emit colored light under optical excitation, such as laser-based image and video displays and screen designs for such displays.

Many image and video displays are designed to directly produce color images in different colors, such as red, green and blue and then project the color images on a screen. Such systems are often referred to as "projection displays" where the screen is simply a surface to make the color images visible to a viewer. Such projection displays may use white light sources where white beams are filtered and modulated to produce images in red, green and blue colors. Alternatively, three light sources in red, green and blue may be used to directly produce three beams in red, green and blue colors and the three beams are modulated to produce images in red, green and blue. Examples of such projection displays include digital light processing (DLP) displays, liquid crystal on silicon (LCoS) displays, and grating light valve (GLV) displays. Notably, GLV displays use three grating light valves to modulate red, green and blue laser beams, respectively, and use a beam scanner to produce the color images on a screen. Another example of laser-based projection displays is described in U.S. Patent No. 5,920,361 entitled "Methods and apparatus for image projection." Projection displays use optical lens systems to image and project the color images on the screen.

Some other image and video displays use a "direct" configuration where the screen itself includes light-producing color pixels to directly form color images in the screen. Such direct displays eliminate the optical lens systems for projecting the images and therefore can be made relatively smaller than projection displays with the same screen sizes. Examples of direct display systems include plasma displays, liquid crystal displays (LCDs), light-emitting-diode (LED) displays (e.g., organic LED displays), and field-emission displays (FEDs). Each color pixel in such direct displays includes three adjacent color pixels which produce light in red, green and blue, respectively, by either directly emit colored light as in LED displays and FEDs or by filtering white light such as the LCDs.

These and other displays are replacing cathode-ray tube (CRT) displays which dominated the display markets for decades since its inception. CRT displays use scanning electron beams in a vacuum tube to excite color phosphors in red, green and blue colors on the screen to emit colored light to produce color images. Although CRT displays can produce vivid colors and bright images with high resolutions, the use of cathode-ray tubes places severe technical limitations on the CRT displays and leads to dramatic decline in demand for CRT displays in recent years.
US 5,715,021 discloses method and apparatus for image projection and US 2002/0122260 discloses a colour laser display apparatus having fluorescent screen scanned with modulated ultraviolet laser light.

### Summary

The specification of this application describes, among others, scanning beam display systems based on scanning light on a fluorescent screen. The screen can include fluorescent materials which emit visible light under excitation of the scanning light to form images with the emitted visible light. Multiple lasers can be used to simultaneously scan multiple laser beams to illuminate the screen for enhanced display brightness. For example, the multiple laser beams can illuminate one screen segment at a time and sequentially scan multiple screen segments to complete a full screen.

More particularly, according to the invention there is provided a display system as defined in independent claim 1, comprising: a plurality of lasers forming a laser array to produce a plurality of laser beams, respectively; a scanning module placed in an optical path of the laser beams to scan the laser beams in two orthogonal directions; and an afocal optical relay module placed between the lasers and the scanning module having a plurality of lenses to reduce a spacing between two adjacent laser beams of the laser array and to overlap the laser beams at the scanning module, wherein the afocal optical relay module comprises: a plurality of first lenses having first focal lengths and respectively placed in optical paths of the laser beams, each first lens receiving only a respective laser beam, without receiving another laser beam among the laser beams, and focusing the respective laser beam; a second lens having a second focal length shorter than the first focal lengths and spaced from the first lenses by the first focal lengths to focus the laser beams from the first lenses; and a third lens having a third focal length longer than the second focal length and spaced from the second lens by the third focal length to focus and direct the laser beams from the second lens to the scanning module, and wherein each first lens refracts the respective laser beam such that the plurality of laser beams converge toward the second lens after the refraction. The system may further comprise: a screen; and a scan lens positioned to receive the laser beams from the scanning module and to project the laser beams onto the screen by imaging the lasers onto the screen. The display system may further comprise: a laser array mounting rack to hold the lasers in a plurality of sub laser arrays, where different sub laser arrays are spatially shifted or staggered relative to one another, a screen that is located to receive the laser beams from the scanning module; and a scan lens positioned to receive the laser beams from the scanning module and to project the laser beams onto the screen.

The system may further comprise a Fresnel lens placed in front of the screen to direct light from the scan lens into the screen at a normal incidence. The screen may comprise fluorescent materials that emit visible light to form images with the emitted light when illuminated by the laser beams. The system may further comprise: a signal modulation controller in communication with the lasers to supply image data to control the lasers which modulate the laser beams, respectively, to carry an image to be displayed on the screen, wherein the signal modulation controller has image data that contains image distortions which negate optical distortions of the scan lens when displayed on the screen. The system further comprise: first and second optical reflectors that reflect the laser beams, wherein the first optical reflector is positioned to reflect scanning laser beams from the scan lens to the second optical reflector which is positioned to reflect the scanning laser beams from the first optical reflector to the screen, wherein the first and second optical reflectors are positioned to fold an optical path from the scan lens to the screen to reduce a distance between the scan lens and the screen. The system may further comprise a plurality of laser actuators, each engaged to a respective laser and operable to adjust a direction of a respective laser beam produced by the laser.

In one implementation of the scanning module, the scanning module comprises a galvo mirror positioned to receive the laser beams from the third lens and scan the received laser beams along the first scanning direction, a polygon scanner positioned to receive the laser beams from the galvo mirror and operable to scan the received laser beams along a second scanning direction orthogonal to the first scanning direction, and wherein the system further comprises an imaging optical device or lens module placed between the galvo mirror and the polygon scanner to image the galvo mirror onto the polygon scanner. The system may further comprise a laser array mounting rack to hold the lasers in a plurality of sub laser arrays, where different sub laser arrays are spatially shifted from one another to have different distances to the scanning module. Lasers in each sub laser array may be oriented to direct respective laser beams in a fan configuration converging towards the scanning module. The optical imaging lens module may comprise a first lens unit and a second lens unit to produce a unity image magnification. The system may further comprise a plurality of lens actuators that are engaged to the first lenses, respectively, each lens actuator operable to adjust a respective first lens.

The specification of this application also describes an example method for scanning light onto a screen to display an image. This method includes modulating light to include optical pulses that carry images to be displayed; scanning the light in two orthogonal scanning directions; and using a scan lens to project the scanned light on a screen to show the images, where the light is modulated to carry distorted versions of the images to include image distortions that negate distortions caused by the scan lens when displayed on the screen. In one implementation of this method, the timing of the optical pulses in one scanning direction is controlled to negate a portion of distortions caused by the scan lens when displayed on the screen.

As a further example, a display system is described to include a light source to produce at least one excitation beam modulated to carry images; a scanning module to scan the excitation beam in two orthogonal directions; a fluorescent screen to receive the scanning excitation beam, the fluorescent screen emitting visible light to form the images with the emitted visible light when illuminated by the scanning excitation beam; and a two-dimensional f-theta scan lens positioned to receive the scanning excitation beam from the scanning module and to project the scanning excitation beam onto the screen.

In various implementations of scanning beam display systems based on scanning light on a fluorescent screen, a holographic beam scanner may be used to scan at least one laser beam. For example, a holographic beam scanner can be used to scan the UV laser excitation beam that is scanned on the phosphor screen which absorbs the UV laser light to produce desired colors and images. A display system, for example, can include a screen comprising parallel fluorescent stripes each absorbing light at an excitation wavelength to emit light of a visible color, and a laser module to project and scan a laser beam at the excitation wavelength onto the screen to convert an image carried by the laser beam via* an optical modulation into a color image produced by the fluorescent stripes on the screen. The laser module includes a holographic beam scanner to scan the laser beam in at least one direction. A suitable holographic scanner can be in various configurations. In one design, for example, the holographic scanner can include a holographic disk that is recorded with hologram patterns and is rotated to deflect an incident beam for scanning. A holographic beam scanner may be used to replace a polygon beam scanner in some examples described in this application to provide the "horizontal" scanning on the screen while a galvo mirror or another beam scanning device is used to provide the "vertical" scanning on the screen. In another implementation, two separate holographic scanners can be used to provide the horizontal beam scanning and vertical beam scanning, respectively. In yet another implementation, a single holographic scanner may be used to provide the 2-dimensional scanning in the horizontal and vertical directions by having a single rotating holographic disk recorded with first hologram patterns for scanning the beam in the horizontal direction and second hologram patterns for scanning the beam in the vertical direction.

These and other examples and implementations are described in detail in the drawings and the detailed description.

### Brief Description of the Drawings

FIG. 1 shows an example scanning laser display system having a fluorescent screen made of laser-excitable phosphors emitting colored lights under excitation of a scanning laser beam that carries the image information to be displayed.
FIGS. 2A and 2B show one example screen structure and the structure of color pixels on the screen in FIG. 1.
FIG. 2C shows another example for a fluorescent screen with fluorescent stripes formed by placing parallel optical filters over the layer of a uniform fluorescent layer which emits white light under optical excitation.
FIG. 3 shows an example implementation of the laser module in FIG. 1 having multiple lasers that direct multiple laser beams on the screen.
FIG. 4 illustrates one example of simultaneous scanning of multiple screen segments with multiple scanning laser beams.
FIGS. 5A and 5B show an example of a laser module with an array of lasers to produce different scanning beams onto the screen for implementations of the display system in FIG. 3.
FIGS. 6, 7, 8 and 9 show examples of lasers having laser actuators that control the vertical direction of the laser beam.
FIG. 10 shows an optical layout of a laser module for implementing the scanning laser module in FIG. 3, not part of the invention.
FIG. 11 shows an example of a two-dimensional f-theta scan lens with three lens elements.
FIG. 12 shows an alternative design of an afocal relay in FIG. 10.
FIG. 13 shows an example of an afocal relay between a galvo mirror and a polygon scanner to image the galvo mirror on to a reflecting facet of the polygon scanner.
FIG. 14 illustrates bow distortions caused by a scan lens in a scanning display system based on the laser module in FIG. 3.
FIGS. 15 shows an example of measured distortions on a screen caused by a scan lens in a scanning system based on the design in FIG. 3.
FIGS. 16A and 16B show two examples of folded optical paths for directing a scanning laser beam to a screen with phosphors in scanning beam rear projection systems.
FIGS. 17A and 17B shows scanning beam displays using fluorescent screens where a polygon scanner is positioned upstream from a galvo mirror along the propagation direction of an excitation beam.
FIGS. 18A and 18B show an example of a holographic disk that can be used to construct a holographic scanner.
FIGS. 19, 20, 21 and 22 illustrate examples of holographic disk scanners using the holographic disk shown in FIGS. 18A and 18B.

### Detailed Description

This application describes scanning beam display systems that use screens with fluorescent materials to emit light under optical excitation to produce images, including laser vector scanner display devices and laser video display devices that use laser excitable fluorescent screens to produce images by absorbing excitation laser light and emitting colored light. Various examples of screen designs with fluorescent materials are described. Screens with phosphor materials under excitation of one or more scanning excitation laser beams are described in detail and are used as specific implementation examples of optically excited fluorescent materials in various system and device examples in this application.

In one implementation, for example, three different color phosphors that are optically excitable by the laser beam to respectively produce light in red, green, and blue colors suitable for forming color images may be formed on the screen as pixel dots or repetitive red, green and blue phosphor stripes in parallel. Various examples described in this application use screens with parallel color phosphor stripes for emitting light in red, green, and blue to illustrate various features of the laser-based displays. Phosphor materials are one type of fluorescent materials. Various described systems, devices and features in the examples that use phosphors as the fluorescent materials are applicable to displays with screens made of other optically excitable, light-emitting, non-phosphor fluorescent materials.

For example, quantum dot materials emit light under proper optical excitation and thus can be used as the fluorescent materials for systems and devices in this application. More specifically, semiconductor compounds such as, among others, CdSe and PbS, can be fabricated in form of particles with a diameter on the order of the exciton Bohr radius of the compounds as quantum dot materials to emit light. To produce light of different colors, different quantum dot materials with different energy band gap structures may be used to emit different colors under the same excitation light. Some quantum dots are between 2 and 10 nanometers in size and include approximately tens of atoms such between 10 to 50 atoms. Quantum dots may be dispersed and mixed in various materials to form liquid solutions, powders, jelly-like matrix materials and solids (e.g., solid solutions). Quantum dot films or film stripes may be formed on a substrate as a screen for a system or device in this application. In one implementation, for example, three different quantum dot materials can be designed and engineered to be optically excited by the scanning laser beam as the optical pump to produce light in red, green, and blue colors suitable for forming color images. Such quantum dots may be formed on the screen as pixel dots arranged in parallel lines (e.g., repetitive sequential red pixel dot line, green pixel dot line and blue pixel dot line).

Examples of scanning beam display systems described here use at least one scanning laser beam to excite color light-emitting materials deposited on a screen to produce color images. The scanning laser beam is modulated to carry images in red, green and blue colors or in other visible colors and is controlled in such a way that the laser beam excites the color light-emitting materials in red, green and blue colors with images in red, green and blue colors, respectively. Hence, the scanning laser beam carries the images but does not directly produce the visible light seen by a viewer. Instead, the color light-emitting fluorescent materials on the screen absorb the energy of the scanning laser beam and emit visible light in red, green and blue or other colors to generate actual color images seen by the viewer.

Laser excitation of the fluorescent materials using one or more laser beams with energy sufficient to cause the fluorescent materials to emit light or to luminesce is one of various forms of optical excitation. In other implementations, the optical excitation may be generated by a non-laser light source that is sufficiently energetic to excite the fluorescent materials used in the screen. Examples of non-laser excitation light sources include various light-emitting diodes (LEDs), light lamps and other light sources that produce light at a wavelength or a spectral band to excite a fluorescent material that converts the light of a higher energy into light of lower energy in the visible range. The excitation optical beam that excites a fluorescent material on the screen can be at a frequency or in a spectral range that is higher in frequency than the frequency of the emitted visible light by the fluorescent material. Accordingly, the excitation optical beam may be in the violet spectral range and the ultra violet (UV) spectral range, e.g., wavelengths under 420 nm. In the examples described below, UV light or a UV laser beam is used as an example of the excitation light for a phosphor material or other fluorescent material and may be light at other wavelength.

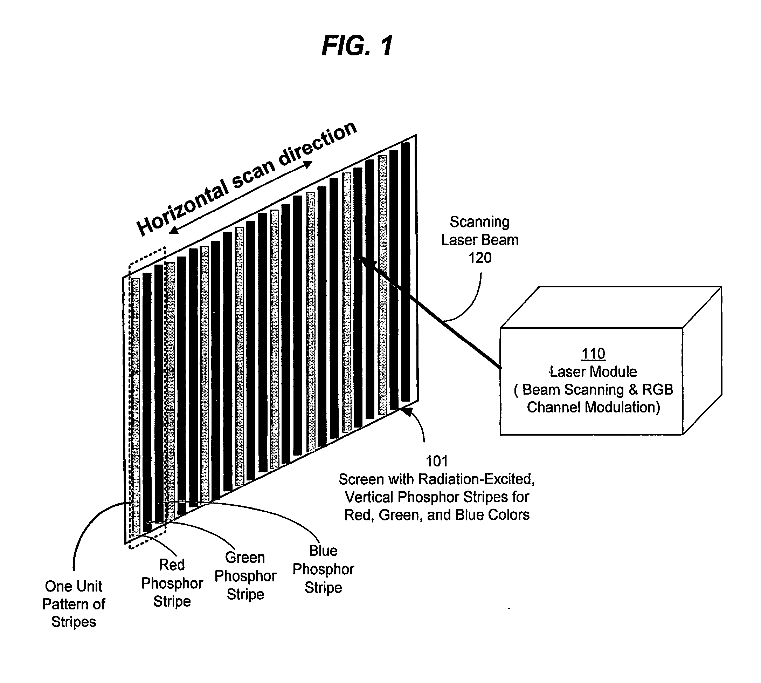

FIG. 1 illustrates an example of a laser-based display system using a screen having color phosphor stripes. Alternatively, color phosphor dots may also be used to define the image pixels on the screen. The system includes a laser module 110 to produce and project at least one scanning laser beam 120 onto a screen 101. The screen 101 has parallel color phosphor stripes in the vertical direction where red phosphor absorbs the laser light to emit light in red, green phosphor absorbs the laser light to emit light in green and blue phosphor absorbs the laser light to emit light in blue. Adjacent three color phosphor stripes are in three different colors. One particular spatial color sequence of the stripes is shown in FIG. 1 as red, green and blue. Other color sequences may also be used. The laser beam 120 is at the wavelength within the optical absorption bandwidth of the color phosphors and is usually at a wavelength shorter than the visible blue and the green and red colors for the color images. As an example, the color phosphors may be phosphors that absorb UV light in the spectral range from about 380 nm to about 420 nm to produce desired red, green and blue light. The laser module 110 can include one or more lasers such as UV diode lasers to produce the beam 120, a beam scanning mechanism to scan the beam 120 horizontally and vertically to render one image frame at a time on the screen 101, and a signal modulation mechanism to modulate the beam 120 to carry the information for image channels for red, green and blue colors. Such display systems may be configured as rear projection systems where the viewer and the laser module 110 are on the opposite sides of the screen 101. Alternatively, such display systems may be configured as front projection systems where the viewer and laser module 110 are on the same side of the screen 101.

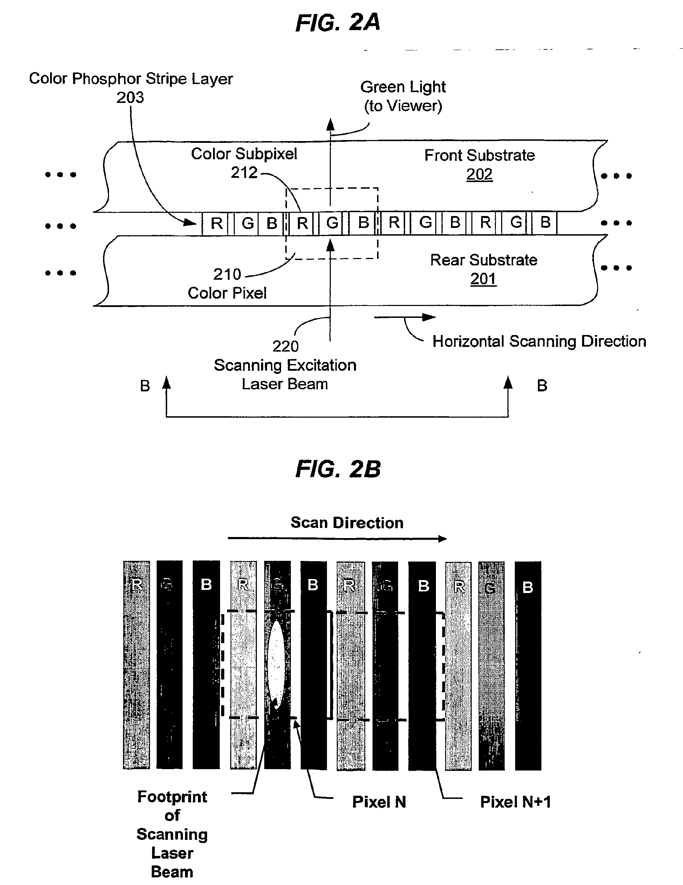

FIG. 2A shows an exemplary design of the screen 101 in FIG. 1. The screen 101 may include a rear substrate 201 which is transparent to the scanning laser beam 120 and faces the laser module 110 to receive the scanning laser beam 120. A second front substrate 202, is fixed relative to the rear substrate 201 and faces the viewer in a rear projection configuration. A color phosphor stripe layer 203 is placed between the substrates 201 and 202 and includes phosphor stripes. The color phosphor stripes for emitting red, green and blue colors are represented by "R", "G" and "B," respectively. The front substrate 202 is transparent to the red, green and blue colors emitted by the phosphor stripes. The substrates 201 and 202 may be made of various materials, including glass or plastic panels. Each color pixel includes portions of three adjacent color phosphor stripes in the horizontal direction and its vertical dimension is defined by the beam spread of the laser beam 120 in the vertical direction. As such, each color pixel includes three subpixels of three different colors (e.g., the red, green and blue). The laser module 110 scans the laser beam 120 one horizontal line at a time, e.g., from left to right and from top to bottom to fill the screen 101. The laser module 110 is fixed in position relative to the screen 101 so that the scanning of the beam 120 can be controlled in a predetermined manner to ensure proper alignment between the laser beam 120 and each pixel position on the screen 101.

In FIG. 2A, the scanning laser beam 120 is directed at the green phosphor stripe within a pixel to produce green light for that pixel. FIG. 2B further shows the operation of the screen 101 in a view along the direction B-B perpendicular to the surface of the screen 101. Since each color stripe is longitudinal in shape, the cross section of the beam 120 may be shaped to be elongated along the direction of the stripe to maximize the fill factor of the beam within each color stripe for a pixel. This may be achieved by using a beam shaping optical element in the laser module 110. A laser source that is used to produce a scanning laser beam that excites a phosphor material on the screen may be a single mode laser or a multimode laser. The laser may also be a single mode along the direction perpendicular to the elongated direction phosphor stripes to have a small beam spread that is confined by the width of each phosphor stripe. Along the elongated direction of the phosphor stripes, this laser beam may have multiple modes to spread over a larger area than the beam spread in the direction across the phosphor stripe. This use of a laser beam with a single mode in one direction to have a small beam footprint on the screen and multiple modes in the perpendicular direction to have a larger footprint on the screen allows the beam to be shaped to fit the elongated color subpixel on the screen and to provide sufficient laser power in the beam via the multimodes to ensure sufficient brightness of the screen.

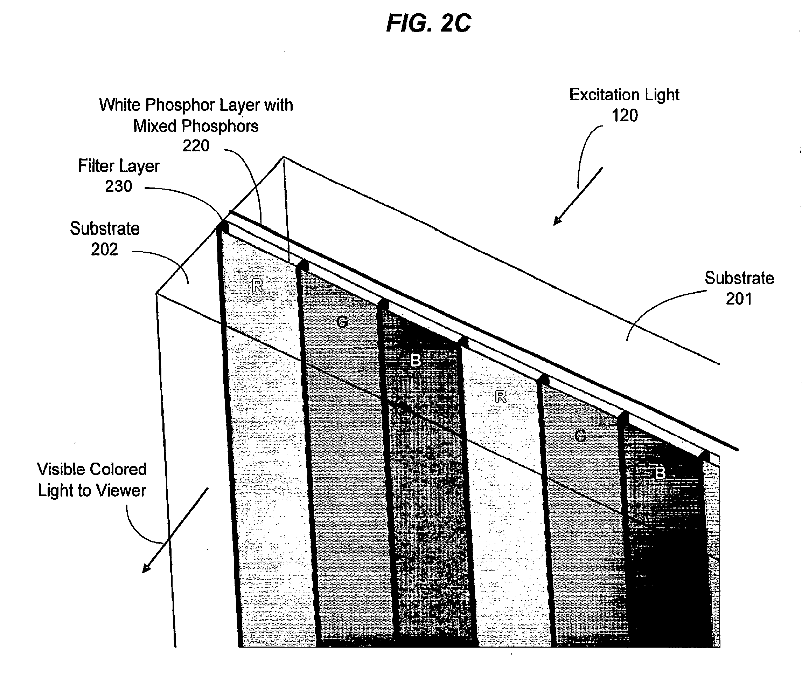

FIG. 2C illustrates another example of a fluorescent screen design that has a contiguous and uniform layer 220 of mixed phosphors. This mixed phosphor layer 220 is designed and constructed to emit white light under optical excitation of the excitation light 120. The mixed phosphors in the mixed phosphor layer 220 can be designed in various ways and a number of compositions for the mixed phosphors that emit white light are known and documented. Notably, a layer 210 of color filters, such as stripes of red-transmitting, green-transmitting and blue-transmitting filters, is placed on the viewer side of the mixed phosphor layer 220 to filter the white light and to produce colored output light. The layers 210 and 220 can be sandwiched between substrates 201 and 202. The color filters may be implemented in various configurations, including in designs similar to the color filters used in color LCD panels. In each color filter region e.g., a red-transmitting filter, the filter transmits the red light and absorbs light of other colors including green light and blue light. Each filter in the layer 210 may be a multilayer structure that effectuates a band-pass interference filter with a desired transmission band. Various designs and techniques may be used for designing and constructing such filters. U.S. Patent No. 5,587,818 entitled "Three color LCD with a black matrix and red and/or blue filters on one substrate and with green filters and red and/or blue filters on the opposite substrate," and U.S. Patent No. 5,684,552 entitled "Color liquid crystal display having a color filter composed of multilayer thin films," for example, describe red, green and blue filters that may be used in the screen design in FIG. 2C. Hence, a fluorescent stripe in the fluorescent screen 101 in various examples described in this application is a fluorescent stripe that emits a designated color under optical excitation and can be either a fluorescent stripe formed of a particular fluorescent material that emits the designed color in FIG. 2A or a combination of a stripe color filter and a white fluorescent layer in FIG. 2C.

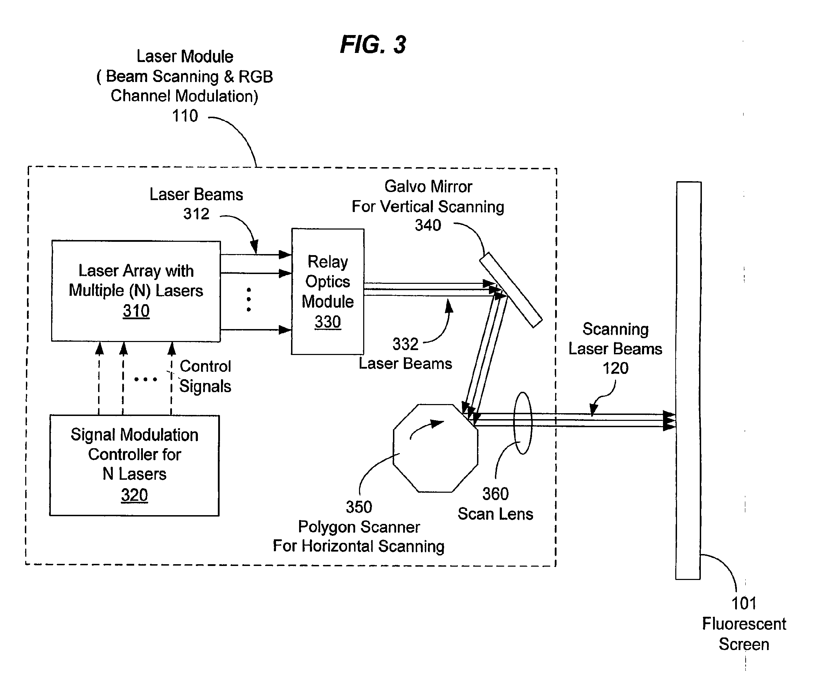

FIG. 3 shows an example implementation of the laser module 110 in FIG. 1. A laser array 310 with multiple lasers is used to generate multiple laser beams 312 to simultaneously scan the screen 101 for enhanced display brightness. A signal modulation controller 320 is provided to control and modulate the lasers in the laser array 310 so that the laser beams 312 are modulated to carry the image to be displayed on the screen 101. The signal modulation controller 320 can include a digital image processor that generates digital image signals for the three different color channels and laser driver circuits that produce laser control signals carrying the digital image signals. The laser control signals are then applied to modulate the lasers, e.g., the currents for laser diodes, in the laser array 310.

The beam scanning is achieved by using a scanning mirror 340 such as a galvo mirror for the vertical scanning and a multi-facet polygon scanner 350 for the horizontal scanning. A scan lens 360 is used to project the scanning beams form the polygon scanner 350 onto the screen 101. The scan lens 360 is designed to image each laser in the laser array 310 onto the screen 101. Each of the different reflective facets of the polygon scanner 350 simultaneously scans N horizontal lines where N is the number of lasers. In the illustrated example, the laser beams are first directed to the galvo mirror 340 and then from the galvo mirror 340 to the polygon scanner 350. The output scanning beams 120 are then projected onto the screen 101. A relay optics module 330 is placed in the optical path of the laser beams 312 to modify the spatial property of the laser beams 312 and to produce a closely packed bundle of beams 332 for scanning by the galvo mirror 340 and the polygon scanner 350 as the scanning beams 120 projected onto the screen 101 to excite the phosphors and to generate the images by colored light emitted by the phosphors.

The laser beams 120 are scanned spatially across the screen 101 to hit different color pixels at different times. Accordingly, each of the modulated beams 120 carries the image signals for the red, green and blue colors for each pixel at different times and for different pixels at different times. Hence, the beams 120 are coded with image information for different pixels at different times by the signal modulation controller 320. The beam scanning thus maps the time-domain coded image signals in the beams 120 onto the spatial pixels on the screen 101. For example, the modulated laser beams 120 can have each color pixel time equally divided into three sequential time slots for the three color subpixels for the three different color channels. The modulation of the beams 120 may use pulse modulation techniques to produce desired grey scales in each color, a proper color combination in each pixel, and desired image brightness.

In one implementation, the multiple beams 120 are directed onto the screen 101 at different and adjacent vertical positions with two adjacent beams being spaced from each other on the screen 101 by one horizontal line of the screen 101 along the vertical direction. For a given position of the galvo mirror 340 and a given position of the polygon scanner 350, the beams 120 may not be aligned with each other along the vertical direction on the screen 101 and may be at different positions on the screen 101 along the horizontal direction. The beams 120 can only cover one portion of the screen 101. At a fixed angular position of the galvo mirror 340, the spinning of the polygon scanner 350 causes the beams 120 from N lasers in the laser array 310 to scan one screen segment of N adjacent horizontal lines on the screen 101. At end of each horizontal scan over one screen segment, the galvo mirror 340 is adjusted to a different fixed angular position so that the vertical positions of all N beams 120 are adjusted to scan the next adjacent screen segment of N horizontal lines. This process iterates until the entire screen 101 is scanned to produce a full screen display.

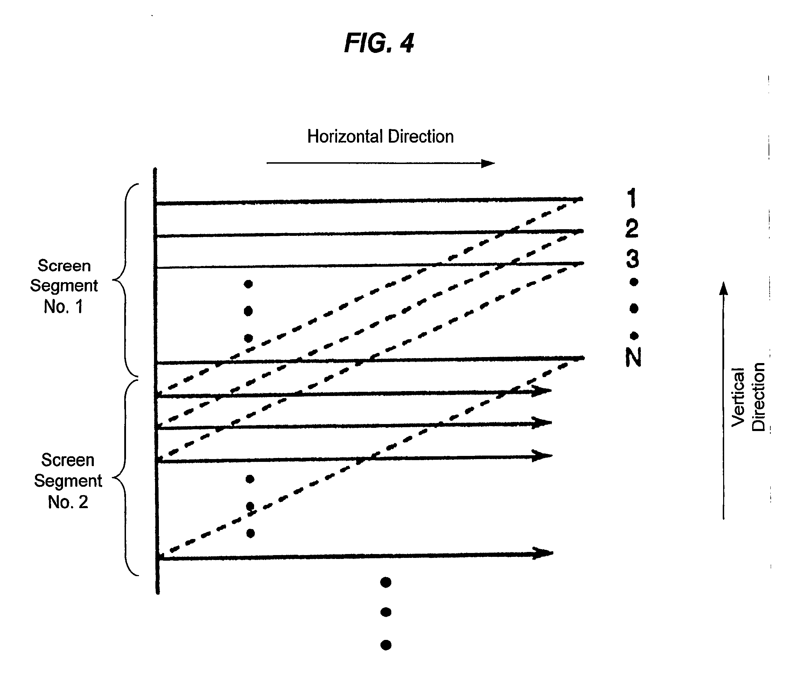

FIG. 4 illustrates the above simultaneous scanning of one screen segment with multiple scanning laser beams at a time and sequentially scanning consecutive screen segments. Visually, the beams 120 behaves like a paint brush to "paint" one thick horizontal stroke across the screen 101 at a time to cover one screen segment and then subsequently to "paint" another thick horizontal stroke to cover an adjacent vertically shifted screen segment. Assuming the laser array 310 has 36 lasers, a 1080-line progressive scan of the screen 101 would require scanning 30 vertical screen segments for a full scan. Hence, this configuration in an effect divides the screen 101 along the vertical direction into multiple screen segments so that the N scanning beams scan one screen segment at a time with each scanning beam scanning only one line in the screen segment and different beams scanning different sequential lines in that screen segment. After one screen segment is scanned, the N scanning beams are moved at the same time to scan the next adjacent screen segment.

In the above design with multiple laser beams, each scanning laser beam scans only a number of lines across the entire screen along the vertical direction that is equal to the number of screen segments. Hence, the polygon scanner for the horizontal scanning can operate at a slower speed than a scanning speed needed for a single beam design where the single beam scans every line of the entire screen. For a given number of total horizontal lines on the screen (e.g., 1080 lines in HDTV), the number of screen segments decreases
as the number of the lasers increases. Hence, with 36 lasers, the galvo mirror 340 and the polygon scanner 350 scan 30 lines per frame while a total of 108 lines per frame are scanned when there are only 10 lasers. Hence, the use of the multiple lasers can increase the image brightness which is approximately proportional to the number of lasers used and,
at the same time, can also advantageously reduce the response speeds of the scanning system.

The vertical beam pointing accuracy is controlled within a threshold in order to produce a high quality image. When multiple scanning beams are used to scan multiple screen segments, this accuracy in the vertical beam pointing should be controlled to avoid or minimize an overlap between two adjacent screen segments because such an overlap in the vertical direction can severely degrade the image quality.
The vertical beam pointing accuracy should be less than the width of one horizontal line in implementations.

This misalignment between two adjacent screen segments can be digitally corrected through modulation of the laser beams 312 by the signal modulation controller 320. Each segment of the screen can be driven with a scan engine capable of generating more horizontal lines than actually required for display in that segment (e.g., 4 extra lines). In a perfectly aligned situation, the beam scanning of the system can be configured to have an equal number of extra (unused) lines above and below a segment image for each screen segment. If vertical misalignment exists, the control electronics in the signal modulation controller 320 can shift the segment image upwards or downwards by utilizing these extra lines in place of the normal lines. For example, if the image needs to be moved upwards one line, the controller 320 operates to cause each line to move upwards to the previous one, utilizing one of the extra lines above the normal image and adding an extra unused line at the bottom. If this adjustment is desired to take place automatically during the startup or normal operation of the system, an optical sensor can be used to provide feedback in real time. This optical sensor may be a position sensing photodiode located to either side of the viewable area of the screen segment to be controlled. The line would over scan onto this sensor when required. Alternatively, an optical beam splitter may be used to provide feedback during the viewable portion of the scan. One of the advantages of the above method for vertical alignment of different screen segments is to reduce or simplify the requirement for accurate optical alignment because the electronic adjustment, when properly implemented, is simpler to implement and can reduce cost of the system.

The above described method allows adjustment with a resolution of only one line along the vertical direction. To accomplish a sub-line (sub-pixel) adjustment along the vertical direction, the scan engine for scanning the excitation beam can be rotated slightly. This produces slightly diagonal horizontal scan lines. The adjacent screen segments would have scan engines slightly rotated on the opposite direction. Under this condition, to create a straight horizontal line, portions of at least two scan lines are used depending on the amount of the rotation. This can produce a less noticeable junction between two neighboring screen segments.

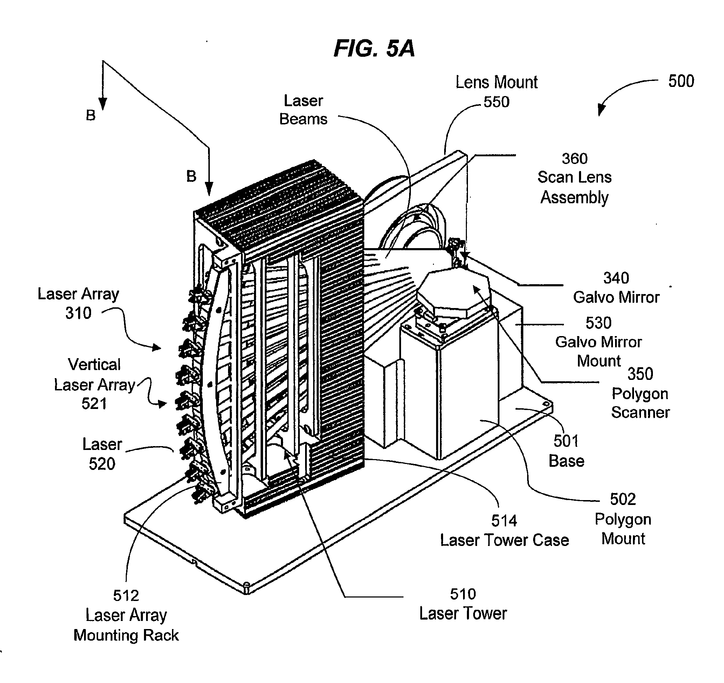

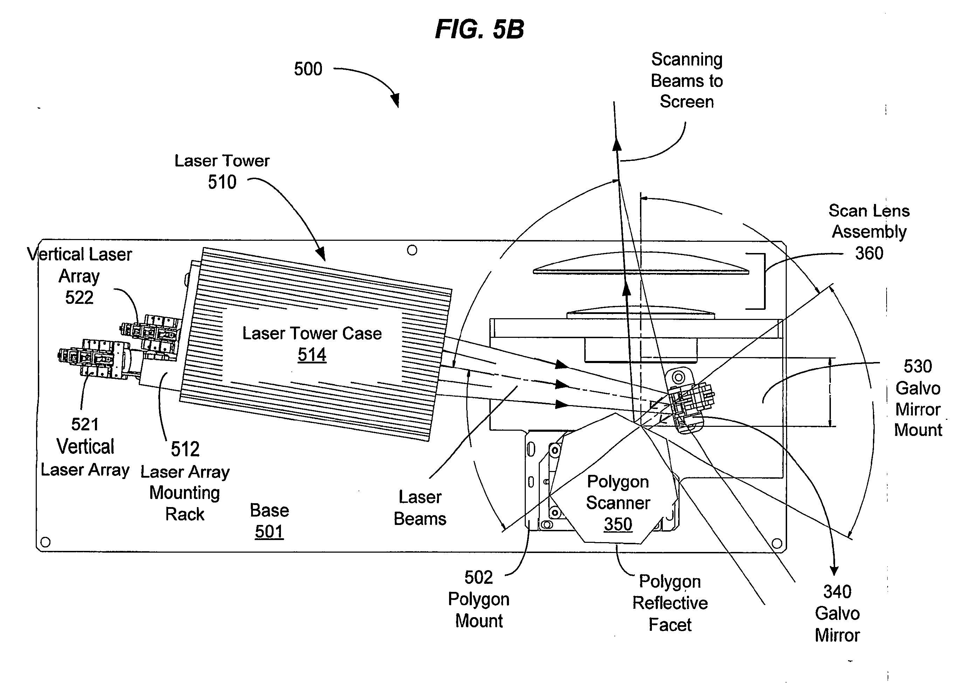

FIGS. 5A and 5B show an example laser module 500 for a scanning beam display system using an array 310 of lasers 520 to generate multiple scanning beams based the designs in FIGS. 3 and 4. The laser module 500 includes a base 510 on which other components are mounted at predetermined fixed positions. A laser tower 510 mounted on one end of the base 501 as the light source for the laser module 500. The laser tower 510 includes a laser array mounting rack 512 that holds multiple lasers 520 of the laser array 310 which produces multiple laser beams and delivers a sufficient amount of total laser power to the fluorescent screen 101 for desired display brightness. The laser tower 510 includes a laser tower case 514 that covers part of the laser tower 510 and forms a partial enclosure for holding the laser array mounting rack 512 and the part of optical pathways of the laser beams.

The laser array mounting rack 512 has a structure to hold lasers 520 at different positions along the vertical direction and different horizontal positions above the base 501. As illustrated, the lasers 520 can be held in different vertical arrays that are spatially shifted or staggered relative to one another along two orthogonal direction in a plane parallel to the base 501. For example, one vertical laser array 521 is shown in FIG. 5A and two adjacent staggered vertical laser arrays 521 and 522 are shown in FIG. 5B. The lasers 520 in each vertical array are oriented by the design of the laser array mounting rack 512 to direct respective laser beams in a fan configuration as converging beams to point to the galvo mirror 340 mounted on a galvo mirror mount 530 on the base 501. The galvo mirror mount 530 can include a driver circuit for operating and controlling the galvo mirror 350.

FIG. 5B shows a bird's eye view of the laser module 500 along the direction B-B as indicated in FIG. 5A. The folded beam paths of the laser beams are used to reduce the size of the laser module 500. Notably, the lasers 520 are spatially staggered along the laser beam direction to form a three-dimensional array and produce a cone of converging laser beams that are directed to the galvo mirror 340. The staggering arrangement allows two neighboring vertical arrays, e.g., the vertical arrays 521 and 522, to be spatially close to each other with an array-to-array spacing less than the spacing between two lasers when placed in a common plane. The two vertical arrays 521 and 522 are staggered in space to have different distances from the scanning module which includes the galvo mirror 340 and the polygon scanner 350. As shown in FIG. 3, the converging laser beams are directed through a relay optical module 330 and are transformed into a bundle of closely packed beams before reaching the galvo mirror 340.
The galvo mirror 340 scans and reflects the bundle of closely packed beams to the polygon scanner 350. A polygon mount 502 on the base 501 is provided to hold the polygon scanner 350 and includes a motor for spinning the polygon scanner 350, a power supply and a polygon control circuit. A lens mount 550 on the base 501 is used to hold a scan lens assembly 540 to receive the scanning laser beams from the polygon scanner 350 and to project the received scanning beams onto the screen.

The following sections describe implementation examples and details of various optical components in the laser module 500.

The laser array mounting rack 512 can be designed to hold the lasers 520 at respective positions and orientations so that each laser beam is directed at a proper direction towards the relay optics module 330 and the galvo mirror 340. The laser mounting by the laser array mounting rack 512 is approximate and can deviate from a desired optical alignment for each laser 520 in part due to variations and tolerances in machining of the laser array mounting rack 512, aging of the structure, thermal fluctuations and other factors. The laser module 500 can include one or more mechanisms to control the direction of each laser beam to optically assign each beam for optimized operation.

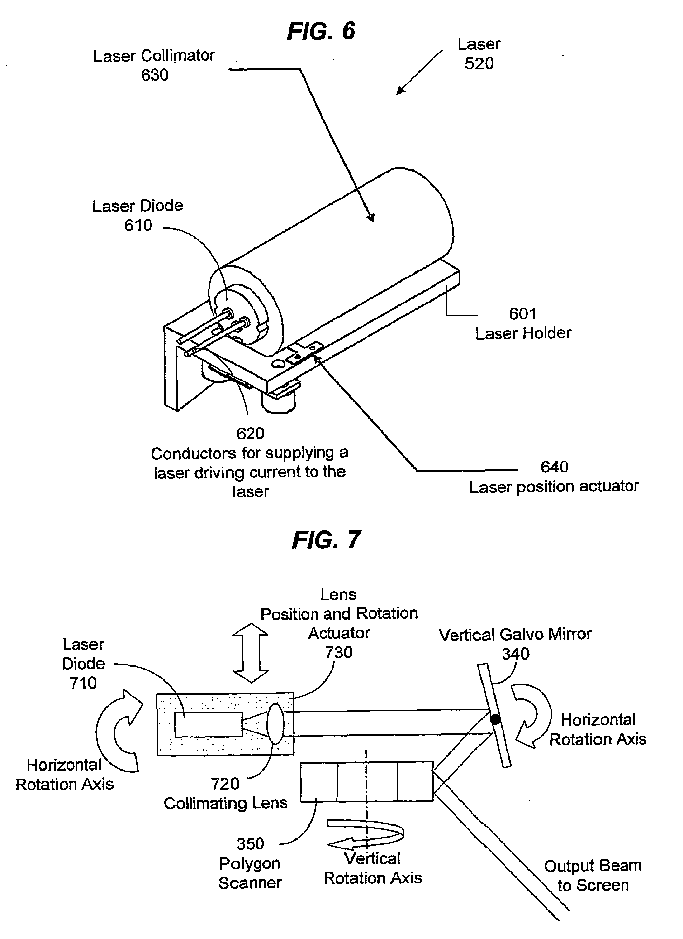

FIG. 6 shows an example of each laser 520 with a laser actuator that controls the laser beam direction. The laser 520 includes a laser diode or a semiconductor-based laser 610, a laser collimator 630 that is fixed relative to the laser diode 610, and a laser position actuator 640 engaged to the assembly of the laser diode 610 and laser collimator 630. The laser diode 610 includes conductor leads 620 that are connected to the laser driver circuit to receive a modulated driver current which generates and modulates the laser beam to carry image data. A laser holder 601 is used as a base to hold the above components and to mount the laser 520 to the laser array mounting rack 512. Because the laser diode 610 and laser collimator 630 in this design are fixed to each other as an integral the assembly, the laser position actuator 640 can be used to tilt the orientation of the assembly of the laser diode 610 and laser collimator 630 relative to the laser holder 601 without changing the relative position or orientation of the laser diode 610 and the laser collimator 630. The tilting of the assembly of the laser diode 610 and laser collimator 630 can be along a single axis, e.g., a horizontal axis parallel to the horizontal rotation axis of the galvo mirror 340. This laser position actuator 640 can be a flexure actuator using a piezoelectric material and can be used for precisely controlling the vertical beam position of each laser beam on the screen.

FIGS. 7, 8 and 9 show other designs for controlling the beam pointing. Each design includes a beam control actuator at the laser to control the pointing of the beam while the galvo mirror near the polygon is used to control the vertical beam scanning. The implementation of this beam control actuator and the above described controls in FIG. 6 allows software control of the static and dynamic beam pointing for each laser.

In FIG. 7, a laser 710 such as a diode laser is used to generate the scanning laser beam which may be at a UV or violet wavelength. A collimating lens 720 in front of the laser diode 710 is mounted to a lens position actuator 730 and is used to collimate the laser light. The lens position actuator 730 can be operated to move the assembly of the laser diode 710 and the collimating lens 720 as a single unit in a direction perpendicular to the laser beam and to tilt the assembly to change the pointing of the laser beam in the vertical direction. This vertical adjustment of the lens position actuator 830 causes a vertical displacement of the laser beam on the screen. The position actuator 730 is designed and controlled to make the vertical displacement on the screen with a resolution much less than the width of one horizontal scanning line.

The lens position actuator 730 may be implemented in various configurations. For example, a lens position actuator similar to an lens actuator used in a DVD drive optical pickup unit may be used. Such a lens actuator may include, e.g., a focus actuator and an integrated laser diode, and can be produced in a large volume at a low cost. The size of the DVD lens actuator is compact and the dynamic response of the actuator is suitable for the vertical adjustment for display systems in this application. Some lens actuators can produce a displacement of about 1 mm. The laser beam may be controlled to tilt around a pivot located on each polygon facet of the polygon scanner 350 to eliminate or minimize the beam displacement on the polygon facet.

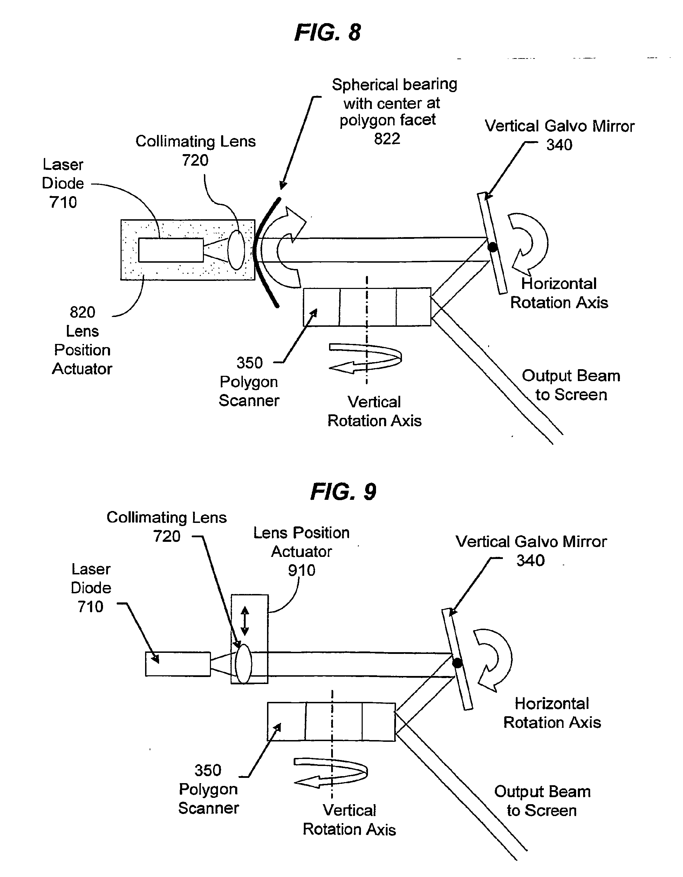

FIG. 8 shows another implementation where a lens rotation actuator 810 is engaged to the laser diode 710 and the collimating lens 720 to tilt the laser beam without changing the relative position of the laser 710 and the collimating lens 720. This tilting or rotation of the collimated laser diode assembly with both the laser 710 and the collimating lens 720 changes the vertical beam pointing on the screen and thus causes a vertical displacement on the screen. The lens rotation actuator 820 is designed and controlled to make the vertical displacement on the screen to have a resolution much less than the width of one horizontal scanning line. Various bearing designs may be used to tilt or rotate the laser assembly, including a flexure, a ball bearing, a jewel bearing, etc. Also, various actuator technologies may also be used, including a voice coil motor, a Nitinol wire actuator, a piezo actuator, an electro-restrictive actuator, and other electromechanical actuators and electromagnetic actuators. The beam focusing of this design is essentially fixed and is not affected by the vertical displacement actuator. The laser beam may be controlled to tilt around a pivot located on the polygon facet to eliminate or minimize the beam displacement on the polygon facet.

A spherical bearing 822 may be used to change the vertical beam pointing on the screen. The assembly of the laser diode 710 and the collimating lens 720 as a whole is movably engaged to the spherical bearing 822 and the actuator 820 operates to causes the assembly to move along the spherical bearing 822. The spherical bearing 822 can be designed to have a radius equal to the distance from the assembly of the laser diode 710 and the collimating lens 720 to the polygon facet, resulting in a rotation about the polygon facet. Other mechanism (e.g. linkage) may be used to simulate the spherical bearing motion path.

FIG. 9 further shows a design where a lens position actuator 910 is engaged to the collimating lens 720 to shift the position of the collimating lens relative to the laser diode 710 along the path perpendicular to the laser beam. This control can be used to control the alignment of the laser beam and the beam position on the screen along the vertical direction.

One of the technical challenges in implementing multiple lasers for simultaneous scanning is to pack the multiple lasers closely to one another in space to produce a single-pixel separation between two adjacent horizontal lines produced by two simultaneously scanning laser beams from two different lasers on the screen. Due to the transverse dimension of each laser which includes a laser diode and a collimating lens, a large array of lasers, when arranged as a two-dimensional array, produces a bundle of laser beams with a large foot print with a spacing between two_adjacent lasers larger than the dimension of one pixel on the screen. To reduce the spacing between the adjacent laser beams and to reduce the dimension of the laser array, the lasers can be staggered in a three-dimensional array as shown in the example in FIGS. 5A and 5B. However, it remains difficult to achieve a one-pixel beam spacing between adjacent beams on the screen in such a staggered three-dimension laser array. One way to solve this technical problem is to design the relay optics module 330 to control the spacing between two adjacent beams along the vertical direction to equal to one pixel on the screen 101.

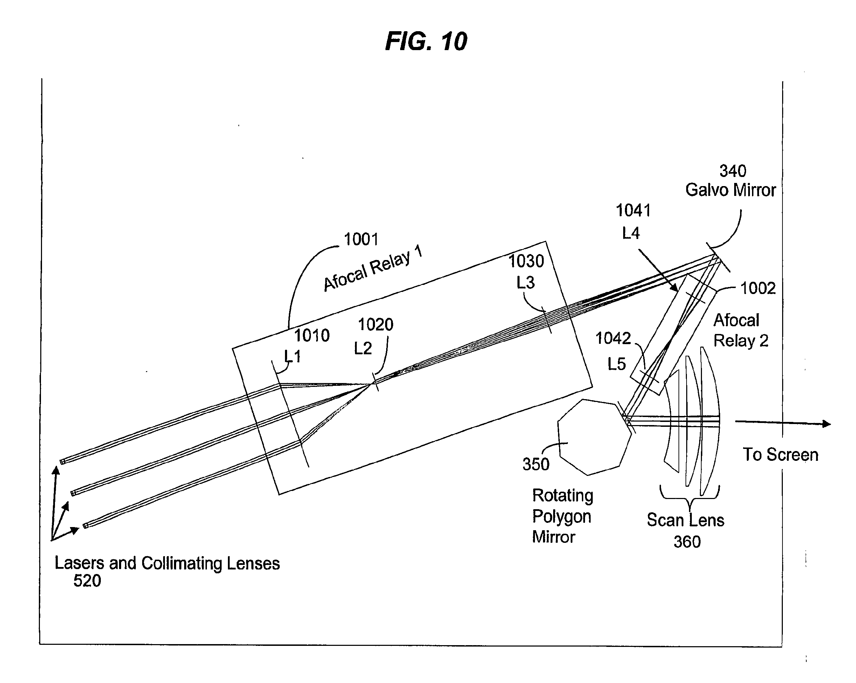

FIG. 10 shows one example of an afocal relay 1001 as the relay optics module 330 in FIG. 3 not part of the invention. The afocal relay 1001 is placed in the optical paths of the laser beams 312 from lasers in the laser array 310 in FIG. 3. Each laser in the laser array 310 may be implemented as a combination of a laser diode and a laser collimator lens, such as the laser diode 610 and the laser collimator 630 in FIG. 6, and the laser diode 710 and the collimator lens 720 in FIGS. 7-9. The afocal relay 1001 includes three optically positive lenses: a first lens 1010 (L1) with a focal length f1, a second lens 1020 (L2) with a focal length f2 and a third lens 1030 (L3) with a focal lens f3. The first lens 1010 is a converging lens that has a large aperture to receive the beams 312 with a large beam-to-beam spacing and is spaced from the second lens 1020, a field lens, by a spacing equal to or near its own focal length f1. The focal length f2 of the second lens 1020 is less than the focal length f1 of the first lens 1010.

In operation, the first lens 1010 focuses the received beams 312 to the second lens 1020 and the first and second lenses 1010 and 1020 collectively reduce the beam size of each beam and the angular beam-to-beam spacing. The focal lengths f1 and f2 are selected to achieve the desired reduction in the beam across section for each beam and the beam-to-beam spacing at the output of the afocal relay 1001. The third lens 1030 has a focal length f3 greater than the focal length f2 and is spaced from the second lens 1020 by its focal length f3. Under this design, the third lens 1030 collimates the diverging beams from the second lens 1020 and controls the location of the exit pupil, i.e., the plane where output beams completely overlap one another. In the present system, the exit pupil is designed to be at the galvo mirror 340. As an example, for a given set of laser collimators 720 or 630 used in the laser array 310, the focal lengths for the three lenses 1010, 1020 and 1030 in the afocal relay 1001 can be 100 mm, 5.128 mm and 200 mm, respectively. Under this specific design, the overall magnification of the afocal relay 1001 is 2 so that the diameter of each output beam leaving the third lens 1030 is twice the diameter of each input beam received by the first lens 1010. Alternatively, the afocal relay 1001 can be configured to have a magnification factor different from 1:2 such as a magnification of 1:1.

FIG. 10 further shows a second afocal relay 1002 in the optical path between the galvo mirror 340 and the polygon scanner 350 to image the surface of the reflective surface of the galvo mirror 340 onto a polygon facet that currently reflects the beams to the screen 101. This imaging effectively makes the galvo mirror 340 coincident with the currently reflecting polygon facet which, in turn, is coincident with the entrance pupil of the scan lens 340. Therefore, the entrance pupil of the scan lens 340 is the pivot point for the scanning beams directed to the scan lens 360. The scan lens 360 performs best when the input beams pivot about a single entrance pupil; hence there is a reduction in the optical distortions that would otherwise occur between successive horizontal scan lines that leave the galvo mirror 240 at different vertical angles. The second afocal relay 1002 can be implemented by different imaging lens systems and may include, for example, two lenses 1041 (L4) and 1042 (L5) in a 4f imaging configuration with a magnification of 1 as illustrated.

The scan lens 360 is designed to image lasers 520 onto the screen 101. In one implementation, the scan lens 360 can be a two-dimensional f-theta lens that is designed to have a linear relation between the location of the focal spot on the screen and the input scan angle (theta) when the input beam is scanned around each of two orthogonal axes perpendicular to the optic axis of the scan lens. Such a scan lens is different from a conventional imaging lens in which the location of the focal spot on the screen is a tangent function of the input scan angle (theta). Some technical features of certain f-theta lenses can be found in, e.g., US Patent No. 4,401,362 and Chapter 22 in "Modern Lens Design" by Warren J. Smith (McGraw-Hill, 1992).

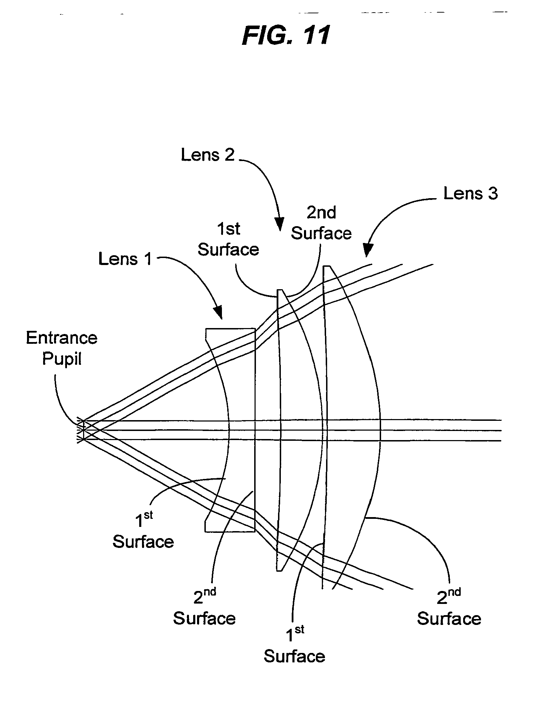

FIG. 11 shows one example design of the two-dimensional f-theta lens for the scan lens 360. In this example, the scan lens has three lens elements: lens 1, lens 2 and lens 3. TABLE 1 shows the prescription of parameters of the three lens elements of the two dimensional scan lens in FIG. 11.

**TABLE 1**

| **Surf. No.** | **Description** | **Radius of Curvature [mm]** | **Thickness [mm]** | **Index of Refraction** | **Clear Aperture [mm]** |
|---|---|---|---|---|---|
| 1 | Entrance Pupil | n/a | 51.000 | | 10.0 |
| 2 | Lens 1 Surface 1 | -129.17 | 9.000 | 1.58558 | 92.1 |
| 3 | Lens 1 Surface 2 | ∞ | 9.120 | | 102.6 |
| 4 | Lens 2 Surface 1 | -1543.30 | 15.000 | 1.49858 | 122.2 |
| 5 | Lens 2 Surface 2 | -182.00 | 1.500 | | 142.1 |
| 6 | Lens 3 Surface 1 | -1867.12 | 19.000 | 1.52981 | 145.6 |
| 7 | Lens 3 Surface 2 | ∞ | 181.500 | | 167.0 |
| 8 | Focal plane | n/a | 1299.500 | | |

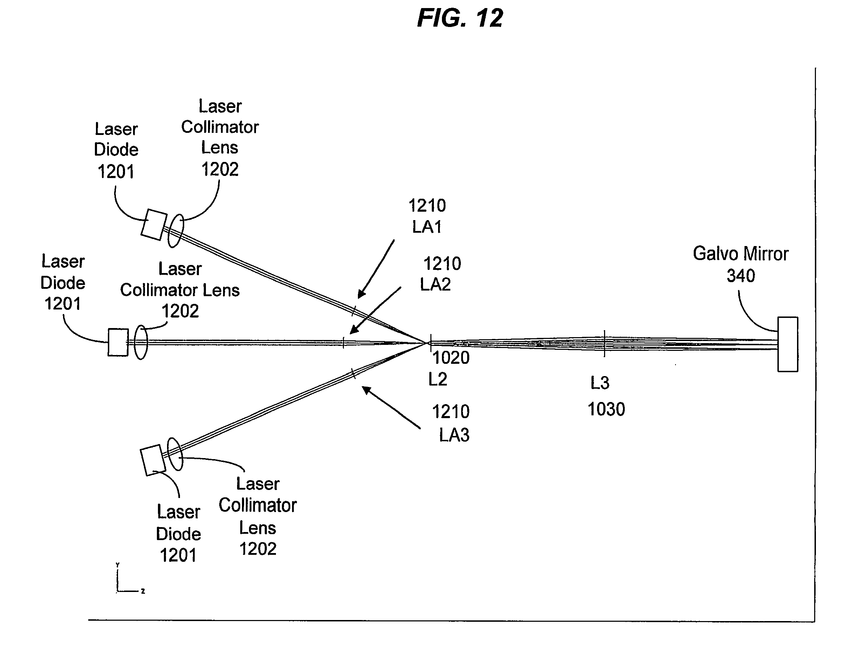

In the afocal relay 1001 in FIG. 10, the first lens 1010 (L1), the converging lens, is a single lens with a large aperture to accommodate for the large bundle of beams from the laser array. Such a large converging lens 1010 can be expensive and thus can increase the cost of the system. FIG. 12 shows an alternative implementation where the single first lens 1010 is replaced by an array of individual small converging lenses 1210 which are tilted in different directions to receive different input laser beams from the lasers such that the refracted beams output by the small lenses 1210 follow the paths of the refracted beams produced by the single lens 1010. Each laser includes a laser diode 1101 and a laser collimator lens 1202. Hence, the design of the afocal relay 1001, e.g., the magnification factor of the afcoal relay 1001, can vary with the design parameters of the laser collimator lenses 1202. Because each small converging lens 1110 only receives and focuses a single beam, the aperture of the small converging lens 1110 can be much smaller than the single lens 1010. In addition, the small converging lens 1010 can be aligned to use its center to receive a respective input laser beam, the lens distortions caused by different beam incident angles and at different incident locations away from the lens center on the small converging lens 1210 are less problematic than using the single lens 1010 to receive different beams. Therefore, an relatively inexpensive lens with a small aperture can be sufficient for the lens 1210.

TABLE 2 provides a specific design example for the afocal relay 1001 in FIG. 12. In this example, the afocal 1001 is a 1:2 afocal system. Each of the lenses 1210 is a single lens with two surfaces (first and second surfaces), the lens 1020 has two lenses with four lens surfaces (first,
second, third and fourth surfaces), and the lens 1030 is a single lens with two lens surfaces (first and second surfaces).

**TABLE 2**

| **Surf. No.** | **Description** | **Radius of Curvature [mm]** | **Thickness [mm]** | **Index of Refraction** | **Clear Aperture [mm]** |
|---|---|---|---|---|---|
| 1 | Lens 1110 (L1) Surface 1 | 52.972 | 2.000 | | 6.0 |
| 2 | Lens 1110 (L1) Surface 2 | ∞ | 94.495 | 1.52972 | 6.0 |
| 3 | Lens 1020 (L2) Surface 1 | -16.306 | 4.545 | 1.71793 | 2.6 |
| 4 | Lens 1020 (L2) Surface 2 | -2.000 | 2.198 | | 2.6 |
| 5 | Lens 1020 (L2) Surface 3 | 4.666 | 6.000 | 1.71793 | 3.4 |
| 6 | Lens 1020 (L2) Surface 4 | -95.497 | 181.500 | | 3.4 |
| 7 | Lens 1030 (L3) Surface 1 | ∞ | 3.000 | 1.46958 | 15.0 |
| 8 | Lens 1030 (L3) Surface 2 | -88.477 | 200.000 | | 15.0 |
| | Exit Pupil | n/a | n/a | | 10.0 |

In other implementations, the collimating function of each laser collimator lens 1201 for each input laser beam and the converging function of the respective small converging lens 1101 can be combined into a single lens unit to eliminate the need for two separate lenses 1201 and 1210 for each input beam from each laser. For example, a single lens unit can be placed in front of each laser diode 1201 to replace the laser collimator lens 1210 and the respective lens 1210 in FIG. 12. This single lens unit can be identical for laser diodes 1201 when such laser diodes 1201 are placed at the same distance from the field lens 1020 (L2). Two single lens units for two laser diodes 1201 can be different when the two laser diodes 1201 are located at different distances from the field lens 1020 (L2) in order for the lenses 1020 (L2) and 1030 (L3) to place the exit pupils of the different beams at a common plane, i.e., the galvo mirror 340.

In the lens array design with multiple tilted small lenses 1210 in FIG. 12, each small lens 1210 may be engaged to a lens actuator to be adjusted axially to do focus correction and laterally to tilt each laser beam incident to the field lens 1020 (L2). In an implementation where the laser collimator lens 1202 and the lens 1210 are combined into a single lens unit in front of each laser diode 1201, a lens actuator may also be used to adjust the single lens unit axially to control the beam focus and laterally to control the beam tilt.

**TABLE 3**

| **Surf. No.** | **Description** | **Radius of Curvature [mm]** | **Thickness [mm]** | **Index of Refraction** | **Clear Aperture Diameter [mm]** | **Conic Constant** |
|---|---|---|---|---|---|---|
| 1 | Entrance Pupil | n/a | 35.00 | | 10 | |
| 2 | Lens 1041 (L4) Surface 1 | -23.045 | 3.000 | 1.52972 | 32 | |
| 3 | Lens 1041 (L4) Surface 2 | -97.509 | 13.157 | | 39 | |
| 4 | Lens 1041 (L4) Surface 3 | -126.950 | 12.000 | 1.75165 | 55 | |
| 5 | Lens 1041 (L4) Surface 4 | -37.713 | 1.000 | | 57 | -.2398 |
| 6 | Lens 1041 (L4) Surface 5 | 122.452 | 10.000 | 1.75165 | 66 | |
| 7 | Lens 1041 (L4) Surface 6 | -1079.800 | 199.362 | | 66 | |
| 8 | Lens 1042 (L5) Surface 1 | 1079.800 | 10.000 | 1.75165 | 66 | |
| 9 | Lens 1042 (L5) Surface 2 | -122.452 | 1.000 | | 66 | |
| 10 | Lens 1042 (L5) Surface 3 | 37.713 | 12.000 | 1.75165 | 57 | -.2398 |
| 11 | Lens 1042 (L5) Surface 4 | 126.950 | 13.157 | | 55 | |
| 12 | Lens 1042 (L5) Surface 5 | 97.509 | 3.000 | 1.52972 | 39 | |
| 13 | Lens 1042 (L5) Surface 5 | 23.045 | 35.000 | | 33 | |
| 14 | Exit Pupil | n/a | | | 10 | |

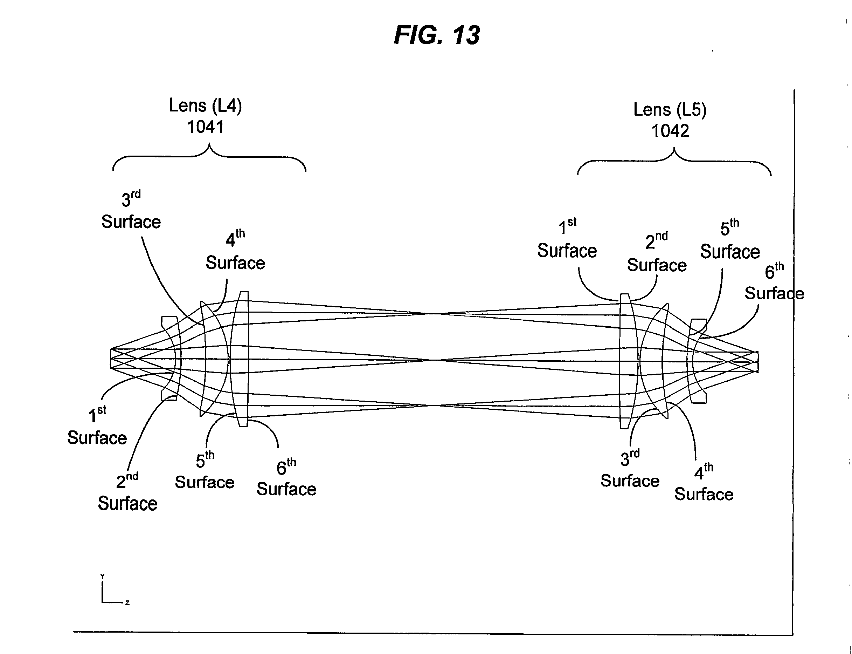

FIG. 13 further shows one specific example design for the 1:1 afocal relay 1002 shown in FIG. 10. In this example, the lens 1041 (L4) has three lenses with six lens surfaces and the lens 1042 (L5) also has three lenses with six lens surfaces. TABLE 3 lists exemplary lens parameters for the design.

Referring to FIGS. 3, 5A, 5B and 10, the scan lens 360, which may include more than one lens, can inherently have optical distortions that change with the incident angle and incident position of a scanning beam at the entrance of the scan lens 360. The scanning light is scanned along the horizontal direction by, e.g., a horizontal scanner such as a polygon scanner and along the vertical direction by, e.g., a vertical scanner such as a galvo mirror. The optical distortions in the scan lens 360 can cause beam positions on the screen 101 to trace a curved line rather than a straight horizontal scanned line. This is often referred to as a horizontal bow distortion. Similarly, the optical distortions in the scan lens 360 can cause beam positions on the screen 101, which ideally form a straight vertical line, to form a curved vertical line instead. This part of the optical distortions of the imaging lens assembly is also known as the vertical bow distortion.

Notably, the scan lens 360, even when implemented as a two-dimensional f-theta lens, can produce a distorted image due to the compound angle that is produced by the two mirror scanning in two orthogonal axes by the galvo mirror 340 and the polygon scanner 350. The distortions caused by the scan lens 360 are present along both the horizontal and vertical directions. Such distortions degrade the displayed image and thus are undesirable.

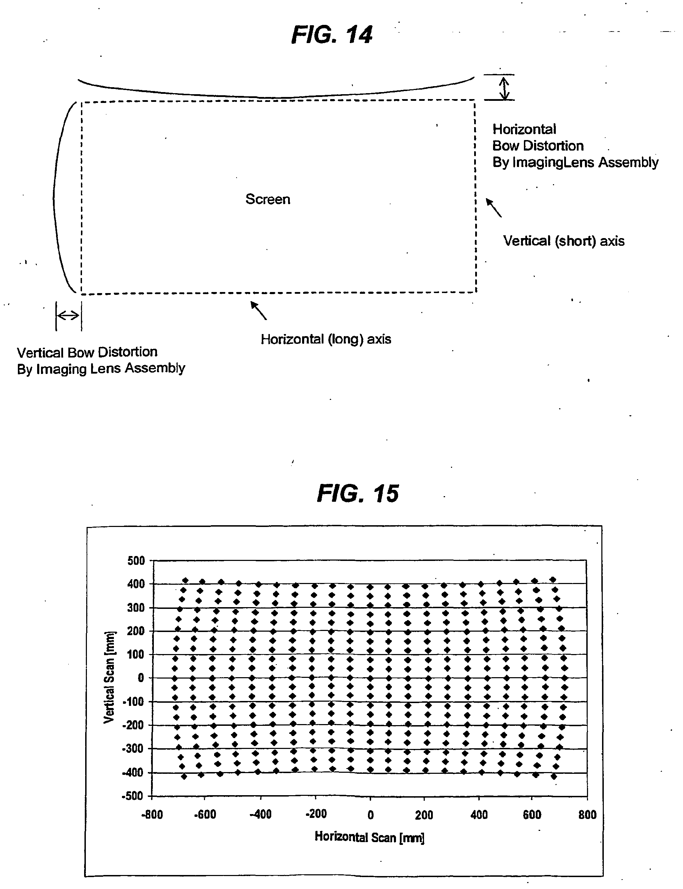

FIG. 14 illustrates an example of the vertical and horizontal bow distortions by a two-dimensional f-theta scan lens located in the optical path between the scanning optical module (e.g., the polygon 350 and galvo mirror 340) and the screen 101. As illustrated, the bow distortion in each direction increases from the center of the screen towards the edge of the screen as the incident angle of the light to the scan lens increases.

One approach to the bow distortion problem is to design the scan lens in a way that reduces the distortions within an acceptable range. This optical approach may require complex lens assembly configurations with multiple lens elements. The complex multiple lens elements can cause the final lens assembly to depart from desired f-theta conditions and thus can compromise the optical scanning performance. The number of lens elements in the assembly usually increases as the tolerance for the distortions decreases. Hence, a lens assembly with an acceptable bow distortion in both directions may include multiple lens elements with complex geometrical shapes. Because the bow distortions are in both directions, the lens elements must be shaped properly in both directions. Due to presence of multiple lenses and complex shape of each lens, such a scan lens with complex multiple lens elements can be expensive to fabricate.

FIG. 15 shows an example map of measured image pixel positions on a fluorescent screen. The effects of the vertical and horizontal bow distortions caused by a scan lens assembly can be measured. The vertical and horizontal bow distortions of a given scan lens assembly is essentially fixed and can be measured.

In recognition of limitations in using a complex multi-lens design for the scan lens to reduce the bow distortions, a digital or electronic distortion correction technique is described below. According to this technique, the image signals modulated onto a scanning beam are digitally or electronically distorted based on measured bow distortions of the scan lens to negate the bow distortions of the scan lens when the image is displayed on the screen.

The digital correction of the vertical bow distortion of the scan lens can be achieved by controlling the timing of laser pulses in the scanning beam during each horizontal scan. This is because a horizontal location of a laser pulse on the screen 101 can be controlled by the timing of the laser pulse during each horizontal scan. A time delay in timing of a pulse can cause the corresponding position of the laser pulse on the screen to spatially shift downstream along the horizontal scan direction. Conversely, an advance in timing of a pulse can cause the corresponding position of the laser pulse on the screen to spatially shift upstream along the horizontal scan direction. A position of a laser pulse on the screen in the horizontal direction can be controlled electronically or digitally by controlling timing of optical pulses in the scanning beam. Notably, the vertical bow distortion can be treated as a shift in position of a pixel in the horizontal direction. Therefore, the timing of the pulses in the scanning beam can be controlled to direct each optical pulse to a location that reduces or offsets the horizontal displacement of the beam caused by the vertical bow distortion of the scan lens.

The horizontal bow distortion can be corrected with a different digital control. As illustrated by the example in FIG. 15, for a given scanning system, the image distortion map on the screen can be measured. The data for this measured image distortion map can be stored in a memory of the digital processor or scan engine of the signal modulation controller in the laser module 110. The digital processing can be programmed to use this measured image distortion map to compute the image warping. Incoming image data generated for an ideal and distortion-free scan lens is remapped based on the computed image warping into predistorted image data at different pixel locations from the original pixel locations so that, when the remapped image data is read out for display, the pixel brightness appears at the correct location on the screen. This remapping of image data on a pixel-by-pixel basis can be achieved by various image warping techniques, for example, by using a linear brightness interpolation between lines to produce minimal visual noise on the screen. Pixel remapping can be effective in correcting the horizontal bow distortion.

The above digital correction method essentially creates new image data for a distorted image on the screen that negates the optical distortions in the scanning system, including the distortions caused by the scan lens 360. The laser beams are then modulated with the modified image data to display images on the screen. Due to the built-in distortions in the modified image data, the optical distortions in the final image on the screen are eliminated or minimized.

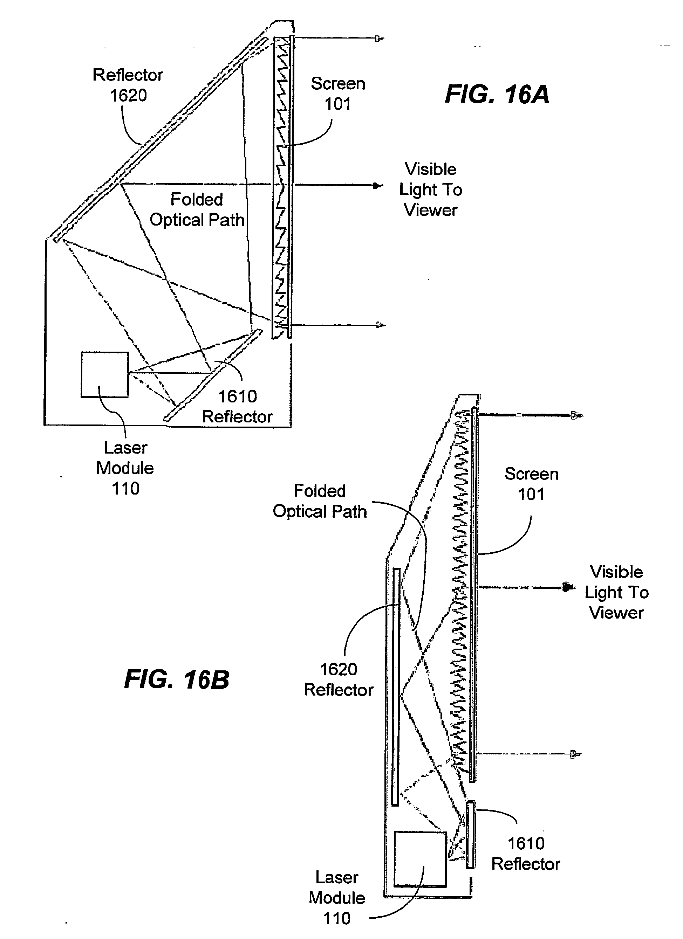

The scanning beam display systems based on FIGS. 3, 5A, 5B and 10 can be implemented using folded optical paths for directing scanning beams from the laser module 110 to the fluorescent screen 101 to reduce the physical spacing between the laser module 110 and the screen 101. FIGS. 16A and 16B show two folded optical designs that direct the output scanning laser beams from the laser module 110 to the fluorescent screen 101 in rear projection configurations. At least two reflectors 1610 and 1620 are used to direct the scanning beams along a folded optical path onto the screen 101. The reflectors 1610 and 1620 can be in various geometries and configurations. Such folded designs reduce the physical dimension of the scanning display systems. In one implementation, at least one of the reflectors 1610 and 1620 may have a curved surface to have a predetermined amount of optical power. For example, the optical power of the reflectors 1610 and 1620 can be selected in connection with the optical power of the scan lens 360 to reduce the optical path length from the scan lens 360 to the screen 101.

The scanning beam display systems described in this application can use a telecentric type lens, such as a Fresnel lens, in front of the screen 101, to redirect the incident scanning excitation beam 120 to be at a normal to the screen 101. This feature can be used to enhance the brightness of the screen.

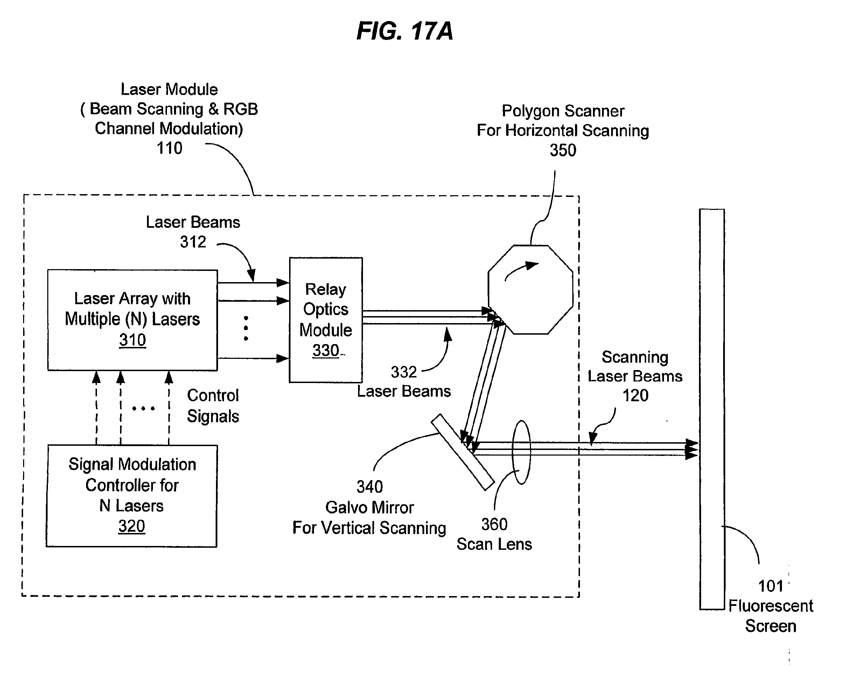

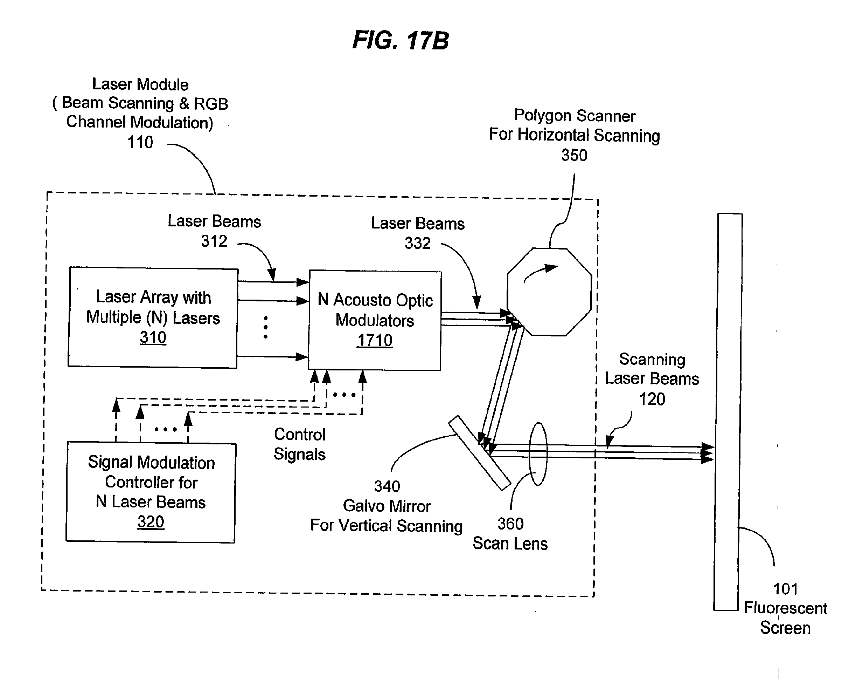

In FIG. 3, the beam scanning is achieved by using the galvo mirror 340 for vertical scanning to direct an excitation beam to the polygon scanner 350 which in turn directs the excitation beam onto the screen 101. Alternatively, the polygon scanner 350 can be used to scan the excitation beam onto the galvo mirror 350 which further directs the beam to the screen 101. FIGS. 17A and 17B show two examples of such scanning beam display systems in which the order of the polygon scanner 350 and the galvo mirror 340 is reversed from the order in FIG. 3. The display in FIG. 17B uses N acousto optic modulators 1710 to respectively modulate N CW excitation laser beams 312 from the laser array 310 to produce modulated laser beams 332 which carry image data. Other optical modulators may also be used to replace the acousto optic modulators 1710.

In the above examples, the scanning of the laser excitation beam is achieved by using a galvo mirror for scanning in one direction (e.g., the vertical direction) and a rotating polygon mirror in another direction (e.g., the horizontal direction). As an alternative to this combination of a galvo mirror and polygon mirror for beam scanning, a holographic beam scanner may be used to scan the laser beam in at least one of the two scanning directions for the display. For example, a holographic beam scanner may be used to scan the UV laser excitation beam that is scanned on the phosphor screen 101 which absorbs the UV laser light to produce desired colors and images. A suitable holographic scanner for this application may be in various configurations. In one design,
for example, the holographic scanner may include a holographic disk that is recorded with hologram patterns and is rotated to deflect an incident beam for scanning. Examples of a scanner using a holographic disk as an alternative to a polygon scanner are described in various literature, including an article entitled "Developments in holographic-based scanner designs" by David M. Rowe, Proc. SPIE Vol. 3131, p. 52-58, Optical Scanning Systems: Design and Applications, Leo Beiser; Stephen F. Sagan; Eds. (1997). This article is incorporated by reference as part of specification of this application. U.S. Patent Nos. 4,923,262 entitled "Scanner system having rotating deflector hologram" to Clay and 5,182,659 entitled "Holographic recording and scanning system and method" to Clay and Rowe describe specific examples of holographic scanners using holographic disks and are incorporated by reference as part of specification of this application.

One aspect of scanning beam display systems described in this application is to use one or more scanning excitation beams at a given excitation wavelength, e.g., in a violet or UV spectral range. The excitation light is the only light present in the optical train of such display systems that leading to the fluorescent screen 101. Visible colors are generated only on the fluorescent screen 101 which converts part of the excitation light into visible colors. Hence, prior to the fluorescent the screen 101, the optical train of such display systems is optically monochromatic. A holographic element is known to be dispersive and can generally operate at a single wavelength. Therefore, different from other full color display systems where light beams of different colors are scanned, scanning beam display systems described in this application only scan a single or multiple excitation beams at a single excitation wavelength onto the fluorescent screen 101. For at least this reason, a holographic scanner, while not suitable in other full color display systems, can be adequately used to scan one or more excitation beams.

Holographic scanners can be used to achieve various advantages in scanning applications. For example, the sensitivity to motor shaft wobble can be significantly reduced, e.g., by a factor of more than 1000 when a holographic deflector operates in the Bragg regime where the nominal input and diffracted angles are equal. This feature can simply the optical design of the scanner. In comparison to a polygon scanner, a holographic disk scanner can have a reduced scanner windage due to the aerodynamic nature of the scan disc and thus can be operated at higher scan rates than a polygon scanner. A holographic disk scanner can be optically transmissive and thus exhibit reduced sensitivity to motor scan jitter in comparison to a polygon scanner which reflects light at its reflective facets. This feature allows the use of a relatively inexpensive ball-bearing motor in place of a relatively expensive and bulky air-bearing motor that is commonly used in polygon scanners. These and other benefits make holographic scanners advantageous over polygon scanners in some applications. One commonly known limitation of holographic scanners caused by the dispersive nature is that their use is usually limited to a single wavelength in monochromatic laser-based devices. This limitation, however, is not an issue in the present scanning beam display systems because the excitation light is monochromatic at a selected wavelength.

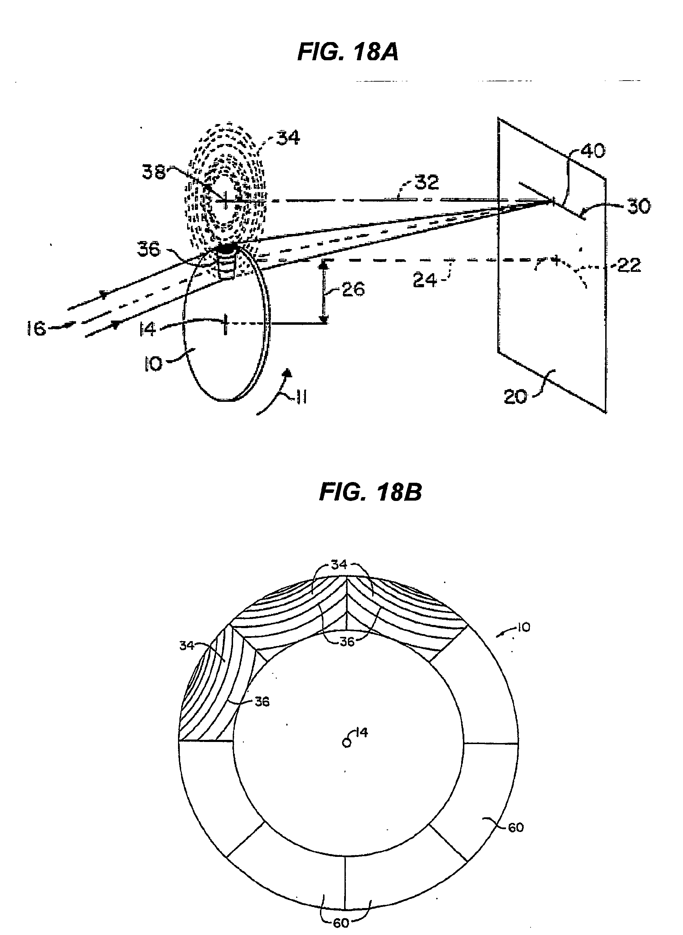

FIGS. 18A and 18B illustrate an exemplary holographic disk scanner 10 described in U.S. Patent No. 4,923,262. This scanner is designed to produce a linear scanning line 30 on a screen 20 when the holographic disk scanner 10 spins in the direction 11 around its axis under a proper incident condition for the input beam 16. In order for the hologram to be configured so as to produce high efficiency for both the p and s plane polarizations, an incident angle of approximately twenty-three degrees is used. See, for example, FIG. 32 at page 2717 of the Oct., 1977 issue (Volume 16, No. 10) of Applied Optics, which shows that at an angle of 23 degress within a 2 degree range, the p and s curves are substantially equal and close to their maximum efficiency. However, a linear grating with a grating constant optimized for an incidence angle of twenty-three degrees produces a severely bowed scan line and is, therefore, unsuitable for most scanning applications. Thus, the hologram, which is not a linear grating, can use an angle of approximately twenty-three degrees angular incidence so as to correct for line-bow by employing a fringe field shaped according to system requirements. For example, line-bow correction can be accomplished by recording a hologram disk segment which has a fringe shape and spatial distribution giving it the property of a lens. If a number of such segments are recorded on the disk, the incident beam would be focused and the focused spot from each segment due to the rotation of the disk would produce a spot locus which is a circular segment in the focal plane. The scan locus in the focal plane would pass through the segment axis.

In the design in FIG. 18A, the center of the holographically recorded disk 10 is displaced from the optical axis with the radius 26 unchanged, then the curvature of the line segment can be made to change provided the holographically recorded lens behaves as one which has barrel distortion. The geometrical relationship of the hologram 34 to the disk 10 is shown in FIG. 18A. The center 38 of hologram 34 having a fringe pattern of circular lines 36 is oriented so that the hologram axis 32 is directed in a straight path to scan locus 40. The configuration of the holographic recording on disk 10 is shown in detail in FIG. 18B where multiple holographic segments 34 are recorded on disk 10. By way of example, the periphery of disk 10 includes eight holograms 34 (only three of which are shown in detail) in the eight segments 60 with lines 36 whose spacing increases with increasing radius from point 38 shown in FIG. 2. More or fewer segments 60 may be formed depending on the need of a specific application.

If the disk 10 is designed to have barrel distortion, the curvature produced by the disk 10 subtracts from the curvature produced by rotating the disk. If the holographically recorded lens is designed to produce a curvature equal to that caused by rotating the disk, then the line will be substantially straight. The extent of curvature of a line varies directly as the ray height for a lens of given barrel distortion. Therefore, the lens offset is adjusted to obtain the required line curvature for neutralizing the curvature due to disc rotation.

The hologram lens formed in the holographic disk 10 has two significant properties, first, it corrects the line curvature; and second, it focuses the incident beam to a point on the focal plane, and, thus, may be used to eliminate the need for a separate focusing lens. The second property of the hologram lens segment, however, has limited practical usefulness, since aberrations necessarily result from such an arrangement. In some cases, the hologram lens segment can replace the scan lens, particularly those cases in which diffraction limited resolution is not required, and in which a small scan angle is satisfactory. For high resolution and/or wide angle applications, the scanner disk 10 can be designed to exploit the second property by distributing the focusing power between the hologram and an auxiliary scan lens.

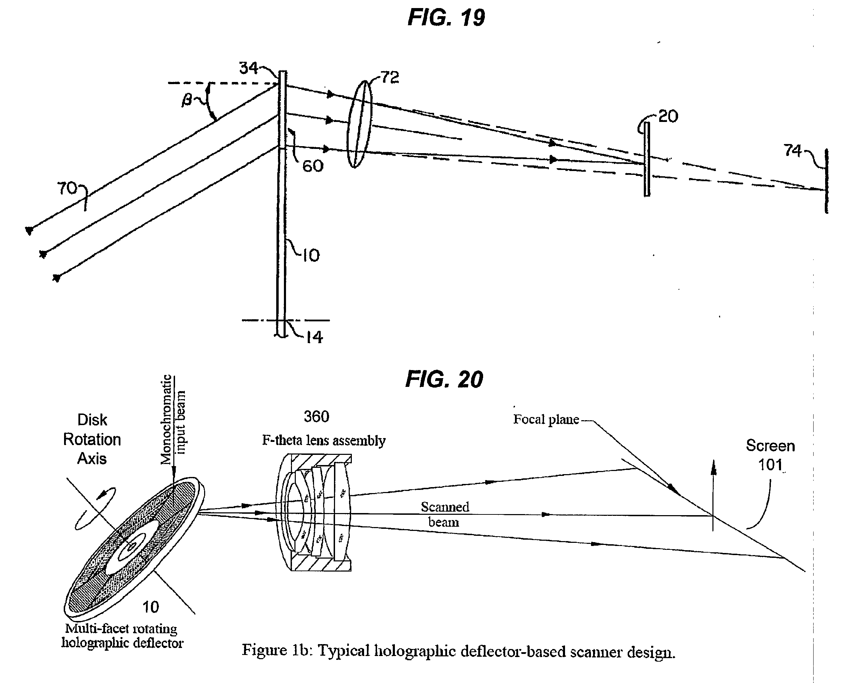

FIG. 19 illustrates a scanner system utilizing the holographic disk 10 shown in FIGS. 18A and 18B. A collimated beam 70, such as an excitation laser beam for exciting the fluorescent screen 101, is shown impinging on disk 10 at the outer periphery thereof which comprises hologram 34 recorded on segments 60. The beam 70 is shown to impinge on segments 60 at an angle β which is at a value such that the amplitudes of the p and s plane polarizations are substantially equal. By using such angle, immunity from polarization dependence is improved. The beam 70 is refracted via a scan lens 72 onto a focal plane 20. Without the scan lens 72, the focal point would be on at a different place 74.

FIGS. 20, 21 and 22 illustrate three examples of holographic scanners based on the design in FIG. 19. The scanner in FIG. 20 includes the holographic disk scanner 10
and a multi-element f-theta scan lens 360 to project the scanning beam onto the screen 101 at the focal plane of the f-theta lens 360. This system can be used in the scanning beam display system shown in FIG. 3 where the polygon scanner 350
is replaced by the holographic disk scanner 10. Hence, the beam from the galvo mirror 340 is directed and scanned by the holographic disk scanner through the f-theta lens 360 onto the screen 101.

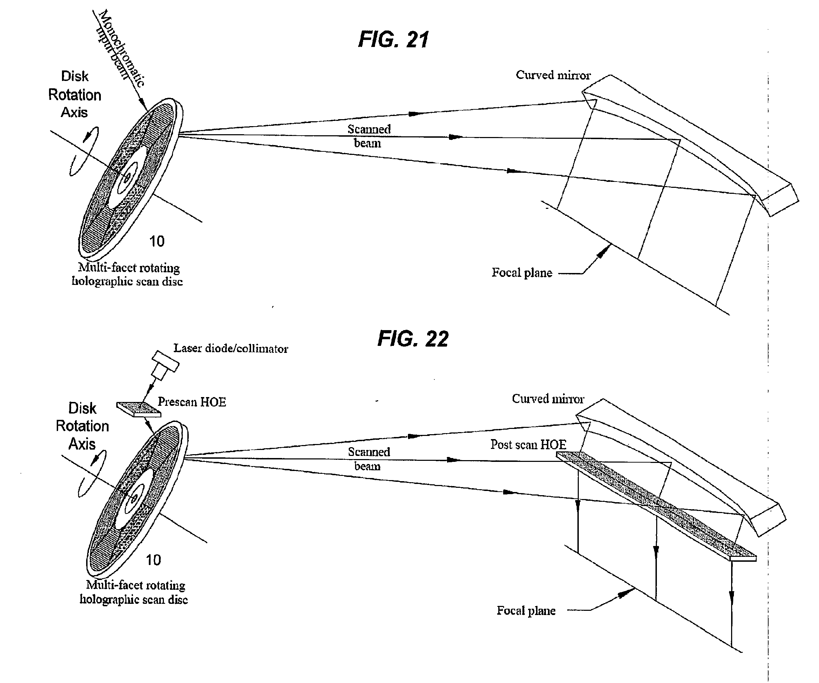

The multi-element f-theta lens 360 can be expensive. Designs in FIGS. 21 and 22 are intended to eliminate the f-theta scan lens 360 by using a less expansive curved reflector to supply the optical focusing power of the replaced f-theta scan lens 360. The curved mirror in FIGS. 21 and 22 can be configured to serve one or more functions including line bow correction, field flattening, and linearity correction. The curved mirror can also make the scan optically telecentric. The curved reflective surface can be aspheric or cylindrical in some implementations. Notably, the curved mirror has only a single optical reflective surface instead of four or more surfaces in many multi-element f-theta lens designs and thus provides a opportunity to reduce cost. The curved mirror can be made by various processes. For example, a gas-assist/compression injection molding process can be used to form a stiff, light-weight structure by evacuating a core plastic material, solidifying the structure in the mold and using compression to form the mirror surface into the plastic. In another example, both injection molding and cold-forming can be used to form the curved mirror where the curved blank substrate is formed by injection molding and the mirror surface is then formed on the substrate using the cold-form replication process. The optical surface of the curved mirror can be formed by diamond turning an aluminum substrate or other substrate materials. To further improve the quality of the optically reflective surface, a replication process can be used to apply a high quality optical surface onto the diamond turned mirror blank using a conventionally polished optical mold. This replication technique can be used to remove undesired diamond turning marks which diffract light creating optical noise at the focal plane.

The holographic scanner design in FIG. 22 includes a mechanism to passively correct degradation of the beam position and loss of spatial resolution on the screen 101 due to shift in optical wavelength of the scanning beam due to, e.g., a drift in wavelength of the light source. This passive correction is accomplished by eliminating the f-theta lens assembly and replacing it with a prescan holographic optical element (HOE) positioned before the holographic scan disc (deflector) 10, a curved mirror after the scan disc, and a postscan HOE between the curved mirror and the focal plane or the screen 101. To compensate for loss of optical power of the removed f-theta lens, the optical power previously provided by the f-theta lens can be designed into the prescan HOE, the postscan HOE and the curved mirror. U.S. 5,182,659 provides additional details on the passive correction mechanism in FIG. 22.

These and other holographic scanners can be used to provide scanning in scanning beam displays described in this application. Holographic scanners can be used in scanning beam displays in various configurations. In one implementation, a holographic beam scanner may be used to replace a polygon beam scanner in some examples described in this application to provide the "horizontal" scanning on the screen while a galvo mirror or another beam scanning device is used to provide the "vertical" scanning on the screen. In another implementation, two separate holographic scanners are used to provide the horizontal beam scanning and vertical beam scanning, respectively. In yet another implementation, a single holographic scanner may be used to provide the 2-dimensional scanning in the horizontal and vertical directions by having a single rotating holographic disk recorded with first hologram patterns for scanning the beam in the horizontal direction and second hologram patterns for scanning the beam in the vertical direction

While the specification of this application contains many specifics, these should not be construed as limitations on the scope of the invention as claimed, but rather as descriptions of features specific to particular embodiments.

## Claims

1. A display system, comprising:
a plurality of lasers (520) forming a laser array (521, 522, 310) to produce a plurality of laser beams, respectively;
a scanning module (340, 350, 360) placed in an optical path of the laser beams to scan the laser beams in two orthogonal directions; and
an afocal optical relay module (330) placed between the lasers (520) and the scanning module (340, 350) having a plurality of lenses (1010, 1020, 1030, 1210) to reduce a spacing between two adjacent laser beams of the laser array and to overlap the laser beams at the scanning module (340, 350), wherein the afocal optical relay module (330) comprises:
a plurality of first lenses (1210) having first focal lengths and respectively placed in optical paths of the laser beams, each first lens (1210) receiving only a respective laser beam, without receiving another laser beam among the laser beams, and focusing the respective laser beam;
a second lens (1020) having a second focal length shorter than the first focal lengths and spaced from the first lenses (1210) by the first focal lengths to focus the laser beams from the first lenses (1210); and
a third lens (1030) having a third focal length longer than the second focal length and spaced from the second lens (1020) by the third focal length to focus and direct the laser beams from the second lens (1020) to the scanning module (340, 350),
and wherein each first lens (1210) is positioned so as to refract the respective laser beam such that the plurality of laser beams converge toward the second lens (1020) after the refraction.

2. A display system according to claim 1, further comprising:
a laser array mounting rack (512) to hold the lasers (520) in a plurality of sub laser arrays (521, 522), where different sub laser arrays (521, 522) are spatially shifted or staggered relative to one another;
a screen (101) that is located to receive the laser beams from the scanning module (340, 350, 360); and
a scan lens (360) positioned to receive the laser beams from the scanning module (340, 350) and to project the laser beams (120) onto the screen (101).

3. The system as in claim 1, further comprising:
a screen (101); and
a scan lens (360) positioned to receive the laser beams from the scanning module (340, 350) and to project the laser beams (120) onto the screen by imaging the lasers onto the screen (101).

4. The system as in claim 2 or 3, further comprising a Fresnel lens placed in front of the screen (101) to direct light from the scan lens (360) into the screen (101) at a normal incidence.

5. The system as in claim 2 or 3, wherein the screen (101) comprises fluorescent materials that emit visible light to form images with the emitted light when illuminated by the laser beams.

6. The system as in claim 2 or 3, further comprising:
a signal modulation controller (320) in communication with the lasers (520) to supply image data to control the lasers (520) which modulate the laser beams, respectively, to carry an image to be displayed on the screen (101),
wherein the signal modulation controller (320) has image data that contains image distortions which negate optical distortions of the scan lens (360) when displayed on the screen (101).

7. The system as in claim 2 or 3, further comprising:
first and second optical reflectors (1610, 1620) that reflect the laser beams, wherein the first optical reflector (1610) is positioned to reflect scanning laser beams from the scan lens (360) to the second optical reflector (1620) which is positioned to reflect the scanning laser beams (120) from the first optical reflector (1610) to the screen (101),
wherein the first and second optical reflectors (1610, 1620) are positioned to fold an optical path from the scan lens (360) to the screen (101) to reduce a distance between the scan lens (360) and the screen (101).

8. The system as in any preceding claim, further comprising a plurality of laser actuators (640), each engaged to a respective laser (520) and operable to adjust a direction of a respective laser beam produced by the laser (520).

9. The system as in any preceding claim, wherein the scanning module (340, 350) comprises:
a galvo mirror (340) positioned to receive the laser beams from the third lens (1030) and scan the received laser beams along the first scanning direction,
a polygon scanner (350) positioned to receive the laser beams from the galvo mirror (340) and operable to scan the received laser beams along a second scanning direction orthogonal to the first scanning direction; and
wherein the system further comprises an imaging optical device (1002) or lens module placed between the galvo mirror (340) and the polygon scanner (350) to image the galvo mirror (340) onto the polygon scanner (350).

10. The system as in claim 1, further comprising:
a laser array mounting rack (512) to hold the lasers (520) in a plurality of sub laser arrays (521, 522), where different sub laser arrays (521, 522) are spatially shifted from one another to have different distances to the scanning module (340, 350).

11. The system as in claim 10, wherein lasers (520) in each sub laser array (521, 522) are oriented to direct respective laser beams in a fan configuration converging towards the scanning module (340, 350).

12. The system as in claim 9, wherein the optical imaging lens module (1002) comprises a first lens unit (1041) and a second lens unit (1042) to produce a unity image magnification.

13. The system as in claim 9, further comprising a plurality of lens actuators (910) that are engaged to the first lenses (720), respectively, each lens actuator (910) operable to adjust a respective first lens (720).

## Patentansprüche

1. Anzeigesystem, umfassend:
eine Vielzahl von Lasern (520), die ein Laserarray (521, 522, 310) zum Erzeugen einer Vielzahl jeweiliger Laserstrahlen bilden,
ein Abtastmodul (340, 350, 360), das in einen optischen Weg der Laserstrahlen gesetzt ist, um die Laserstrahlen in zwei orthogonalen Richtungen abzutasten, und
ein zwischen die Laser (520) und das Abtastmodul (340, 350) gesetztes afokales optisches Relaismodul (330), das eine Vielzahl von Linsen (1010, 1020, 1030, 1210) hat, um eine Beabstandung zwischen zwei benachbarten Laserstrahlen des Laserarrays zu reduzieren und die Laserstrahlen am Abtastmodul (340, 350) zu überlappen, wobei das afokale optische Relaismodul (330) Folgendes aufweist:
eine Vielzahl von ersten Linsen (1210), die erste fokale Längen haben und jeweils in optische Wege der Laserstrahlen gesetzt sind, wobei jede erste Linse (1210) nur einen jeweiligen Laserstrahl empfängt, ohne einen anderen Laserstrahl unter den Laserstrahlen zu empfangen, und den jeweiligen Laserstrahl bündelt,
eine zweite Linse (1020), die eine zweite fokale Länge hat, die kürzer als die ersten fokalen Längen ist und von den ersten Linsen (1210) um die ersten fokalen Längen beabstandet ist, um die Laserstrahlen von den ersten Linsen (1210) zu bündeln, und
eine dritte Linse (1030), die eine dritte fokale Länge hat, die länger als die zweite fokale Länge ist und von der zweiten Linse (1020) um die dritte fokale Länge beabstandet ist, um die Laserstrahlen zu bündeln und von der zweiten Linse (1020) zum Abtastmodul (340, 350) zu richten,
und wobei jede erste Linse (1210) positioniert ist, um den jeweiligen Laserstrahl zu brechen, so dass die Vielzahl von Laserstrahlen nach der Brechung zur zweiten Linse (1020) hin zusammenlaufen.

2. Anzeigesystem nach Anspruch 1, das ferner Folgendes aufweist:
einen Laserarrayeinbauträger (512) zur Aufnahme der Laser (520) in einer Vielzahl von Laserarray-Untergruppen (551, 522), wobei verschiedene Laserarray-Untergruppen (521, 522) räumlich zueinander verschoben oder versetzt sind,
einen Bildschirm (101), der zum Empfangen der Laserstrahlen aus dem Abtastmodul (340, 350, 360) angeordnet ist, und
eine Abtastlinse (360), die zum Empfangen der Laserstrahlen aus dem Abtastmodul (340, 350) und zum Projizieren der Laserstrahlen (120) auf den Bildschirm (101) positioniert ist.

3. System nach Anspruch 1, das ferner Folgendes aufweist:
einen Bildschirm (101) und
eine Abtastlinse (360), die zum Empfangen der Laserstrahlen aus dem Abtastmodul (340, 350) und zum Projizieren der Laserstrahlen (120) auf den Bildschirm durch Abbilden der Laser auf den Bildschirm (101) positioniert ist.

4. System nach Anspruch 2 oder 3, das ferner eine Fresnel-Linse aufweist, die vor den Bildschirm (101) gesetzt ist, um Licht bei normalem Einfall von der Abtastlinse (360) in den Bildschirm (101) zu richten.

5. System nach Anspruch 2 oder 3, wobei der Bildschirm (101) Leuchtstoffe aufweist, die sichtbares Licht emittieren, um bei Belichtung durch die Laserstrahlen mit dem emittierten Licht Bilder zu bilden.

6. System nach Anspruch 2 oder 3, das ferner Folgendes aufweist:
einen mit den Lasern (520) in Kommunikation befindliches Signalmodulationssteuerteil (320) zum Anlegen von Bilddaten zum Steuern der Laser (520), welche die Laserstrahlen jeweils modulieren, so dass sie ein auf dem Bildschirm (101) anzuzeigendes Bild transportieren,
wobei der Signalmodulationssteuerteil (320) Bilddaten hat, die Bildverzerrungen enthalten, die optische Verzerrungen der Abtastlinse (360) aufheben, wenn sie auf dem Bildschirm (101) angezeigt werden.

7. System nach Anspruch 2 oder 3, das ferner Folgendes aufweist:
einen ersten und einen zweiten optischen Reflektor (1610, 1620), die Laserstrahlen reflektieren, wobei der erste optische Reflektor (1610) positioniert ist, um Abtastlaserstrahlen von der Abtastlinse (360) zum zweiten optischen Reflektor (1620) zu reflektieren, der zum Reflektieren der Abtastlaserstrahlen (120) von dem ersten optischen Reflektor (1610) zum Bildschirm (101) positioniert ist,
wobei der erste und der zweite optische Reflektor (1610, 1620) positioniert sind, um einen optischen Weg von der Abtastlinse (360) zum Bildschirm (101) zu falten, um einen Abstand zwischen der Abtastlinse (360) und dem Bildschirm (101) zu verringern.

8. System nach einem der vorhergehenden Ansprüche, das ferner eine Vielzahl von Laserstellantrieben (640) aufweist, die jeweils mit einem jeweiligen Laser (520) in Eingriff und zum Einstellen einer Richtung eines von dem Laser (520) erzeugten jeweiligen Laserstrahls funktionell sind.

9. System nach einem der vorhergehenden Ansprüche, wobei das Abtastmodul (340, 350) Folgendes aufweist:
einen Galvanometerspiegel (340), der zum Empfangen der Laserstrahlen von der dritten Linse (1030) und zum Abtasten der empfangenen Laserstrahlen entlang der ersten Abtastrichtung positioniert ist,
einen Polygonscanner (350), der zum Empfangen der Laserstrahlen von dem Galvanometerspiegel (340) positioniert und zum Abtasten der empfangenen Laserstrahlen entlang einer zu der ersten Abtastrichtung orthogonalen zweiten Abtastrichtung funktionell ist, und
wobei das System ferner eine bildgebende optische Einrichtung (1002) oder ein Linsenmodul aufweist, die bzw. das zwischen den Galvanometerspiegel (340) und den Polygonscanner (350) gesetzt ist, um den Galvanometerspiegel (340) auf den Polygonscanner (350) abzubilden.

10. System nach Anspruch 1, das ferner Folgendes aufweist:
einen Laserarrayeinbauträger (512) zur Aufnahme der Laser (520) in einer Vielzahl von Laserarray-Untergruppen (521, 522), wobei verschiedene Laserarray-Untergruppen (521, 522) räumlich zueinander verschoben sind, so dass sie verschiedene Abstände zum Abtastmodul (340, 350) haben.

11. System nach Anspruch 10, wobei Laser (520) in jeder Laserarray-Untergruppe (521, 522) zum Richten jeweiliger Laserstrahlen in einer Fächerkonfiguration, die zum Abtastmodul (340, 350) hin zusammenläuft, ausgerichtet sind.

12. System nach Anspruch 9, wobei das optische Bildgebungslinsenmodul (1002) eine erste Linseneinheit (1041) und eine zweite Linseneinheit (1042) zum Erzeugen einer Einheitsbildvergrößerung aufweist.

13. System nach Anspruch 9, das ferner eine Vielzahl von Linsenstellantrieben (910) aufweist, die mit den ersten Linsen (720) in Eingriff sind, wobei jeder Linsenstellantrieb (910) zum Einstellen einer jeweiligen ersten Linse (720) funktionell ist.

## Revendications

1. Système d'affichage, comprenant :
une pluralité de lasers (520) formant une rangée de lasers (521, 522, 310) pour produire une pluralité de rayons laser respectivement;
un module de balayage (340, 350, 360) placé dans un chemin optique des rayons laser pour balayer les rayons laser dans deux directions orthogonales; et
un module de relais optique afocal (330) placé entre les lasers (520) et le module de balayage (340, 350) ayant une pluralité de lentilles (1010, 1020, 1030, 1210) pour réduire un espacement entre deux rayons laser adjacents de la rangée de lasers et pour recouvrir les rayons laser au niveau du module de balayage (340, 350), où le module de relais optique afocal (330) comprend :
une pluralité de premières lentilles (1210) ayant des premières longueurs focales et placées respectivement dans les chemins optiques des rayons laser, chaque première lentille (1210) ne recevant qu'un rayon laser respectif, sans recevoir un autre rayon laser parmi les rayons laser et focalisant le rayon laser respectif;
une deuxième lentille (1020) ayant une deuxième longueur focale plus courte que les premières longueurs focales et espacée des premières lentilles (1210) par les premières longueurs focales pour focaliser les rayons laser des premières lentilles (1210); et
une troisième lentille (1030) ayant une troisième longueur focale plus longue que la deuxième longueur focale et espacée de la deuxième lentille (1020) par la troisième longueur focale pour focaliser et diriger les rayons laser de la deuxième lentille (1020) vers le module de balayage (340, 350);
et dans lequel chaque première lentille (1210) est positionnée de manière à réfracter le rayon laser respectif de telle sorte que la pluralité de rayons laser converge vers la deuxième lentille (1020) après la réfraction.

2. Système d'affichage selon la revendication 1, comprenant en outre :
un châssis de montage de rangée de lasers (512) pour tenir les lasers (520) en une pluralité de sous-rangées de lasers (521, 522), où différentes sous-rangées de lasers (521, 522) sont déplacées ou décalées spatialement l'une par rapport à l'autre;
un écran (101) qui est situé pour recevoir les rayons laser du module de balayage (340, 350, 360); et
une lentille de balayage (360) positionnée pour recevoir les rayons laser du module de balayage (340, 350) et pour projeter les rayons laser (120) sur l'écran (101).

3. Système selon la revendication 1, comprenant en outre :
un écran (101); et
une lentille de balayage (360) positionnée pour recevoir les rayons laser du module de balayage (340, 350) et pour projeter les rayons laser (120) sur l'écran en imageant les lasers sur l'écran (101).

4. Système selon la revendication 2 ou 3, comprenant en outre une lentille de Fresnel placée devant l'écran (101) pour diriger la lumière de la lentille de balayage (360) sur l'écran (101) à une incidence normale.

5. Système selon la revendication 2 ou 3, dans lequel l'écran (101) comprend des matériaux fluorescents qui émettent une lumière visible pour former des images avec la lumière émise lorsque éclairé par les rayons laser.

6. Système selon la revendication 2 ou 3, comprenant en outre :
un contrôleur de modulation de signaux (320) en communication avec les lasers (520) pour fournir des données d'image afin de contrôler les lasers (520) qui modulent les rayons laser, respectivement, pour transporter une image à afficher sur l'écran (101);
dans lequel le contrôleur de modulation de signaux (320) a des données d'image qui contiennent des distorsions d'image qui inversent les distorsions optiques de la lentille de balayage (360) lorsque affichée sur l'écran (101).

7. Système selon la revendication 2 ou 3, comprenant en outre :
un premier et un deuxième réflecteurs optiques (1610, 1620) qui réfléchissent les rayons laser, où le premier réflecteur optique (1610) est positionné pour réfléchir les rayons laser de la lentille de balayage (360) vers le deuxième réflecteur optique (1620) qui est positionné pour réfléchir les rayons laser de balayage (120) du premier réflecteur optique (1610) à l'écran (101),
dans lequel le premier et le deuxième réflecteurs optiques (1610, 1620) sont positionnés pour replier un chemin optique de la lentille de balayage (360) à l'écran (101) afin de réduire une distance entre la lentille de balayage (360) et l'écran (101).

8. Système selon l'une quelconque des revendications précédentes, comprenant en outre une pluralité d'actionneurs de laser (640), associés chacun à un laser respectif (520) et opérationnels pour régler une direction d'un rayon laser respectif produit par le laser (520).

9. Système selon l'une quelconque des revendications précédentes, dans lequel le module de balayage (340, 350) comprend :
un miroir galvo (340) positionné pour recevoir les rayons laser de la troisième lentille (1030) et pour balayer les rayons laser reçus le long de la première direction de balayage,
un scanneur polygonal (350) positionné pour recevoir les rayons laser du miroir galvo (340) et opérationnel pour balayer les rayons laser reçus le long d'une deuxième direction de balayage orthogonale à la première direction; et
où le système comprend en outre un dispositif optique imageur (1002) ou module de lentille placé entre le miroir galvo (340) et le scanneur polygonal (350) pour imager le miroir galvo (340) sur le scanneur polygonal (350).

10. Système selon la revendication 1, comprenant en outre :
un châssis de montage de rangée de lasers (512) pour tenir les lasers (520) en une pluralité de sous-rangées de lasers (521, 522), où les différentes sous-rangées de laser (521, 522) sont déplacées spatialement l'une de l'autre pour avoir des distances différentes jusqu'au module de balayage (340, 350).

11. Système selon la revendication 10, dans lequel les lasers (520) dans chaque sous-rangée de lasers (521, 522) sont orientés pour diriger les rayons laser respectifs selon une configuration en éventail convergeant vers le module de balayage (340, 350).

12. Système selon la revendication 9, dans lequel le module de lentille imageur optique (1002) comprend une première unité de lentille (1041) et une deuxième unité de lentille (1042) pour produire un grossissement d'image unitaire.

13. Système selon la revendication 9, comprenant en outre une pluralité d'actionneurs de lentilles (910) qui sont associés aux premières lentilles (720), respectivement, chaque actionneur de lentille (910) opérationnel pour régler une première lentille respective (720).
